# EUROPÄISCHE PATENTANMELDUNG

(11) **EP 4 297 230 A2**
(43) Veröffentlichungstag der Anmeldung: **27.12.2023**
(21) Anmeldenummer: 23202486.9
(22) Anmeldetag: 20.08.2020
(51) Int. Cl.: H02J 3/46

(54) **UMRICHTERBASIERTE ERZEUGER UND VERFAHREN ZUM EINSPEISEN ELEKTRISCHER LEISTUNG**

(62) Teilanmeldung aus: 20192018.8
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Einspeisen elektrischer Leistung in ein eine Netzspannung mit einer Netzfrequenz aufweisendes elektrisches Versorgungsnetz (120) mittels eines umrichterbasierten Erzeugers (100, 112), insbesondere mittels eines Windenergiesystems (100, 112), umfassend die Schritte: Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet, Einspeisen elektrischer Leistung in das elektrische Versorgungsnetz (120) in einem Normalmodus in Abhängigkeit vom geschätzten Umrichteranteil, Aktivieren eines ersten Stützmodus in Abhängigkeit vom geschätzten Umrichteranteil gemäß einer ersten Aktivierungsbedingung, Aktivieren eines zweiten Stützmodus in Abhängigkeit vom geschätzten Umrichteranteil gemäß einer zweiten Aktivierungsbedingung, die zur ersten Aktivierungsbedingung verschieden ist. Die Erfindung ist dadurch gekennzeichnet, dass im ersten Stützmodus eine schnelle Leistungsreduktion erfolgt.

## Beschreibung

Die vorliegende Erfindung betrifft ein Verfahren zum Einspeisen elektrischer Leistung in ein elektrisches Versorgungsnetz mittels eines umrichterbasierten Erzeugers, insbesondere mittels eines Windenergiesystems. Die Erfindung betrifft auch ein Windenergiesystem zum Einspeisen elektrischer Leistung in ein elektrisches Versorgungsnetz.

Es ist bekannt, elektrische Leistung mittels umrichterbasierter Erzeuger, wie Windenergieanlagen oder Windparks, in ein elektrisches Versorgungsnetz einzuspeisen. Der Anteil solcher umrichterbasierter Erzeuger nimmt dabei in vielen elektrischen Versorgungsnetzen zu. Dadurch kommt umrichterbasierten Erzeugern eine zunehmende Bedeutung zur Stützung des elektrischen Versorgungsnetzes zu.

Dabei wurde erkannt, dass umrichterbasierte Erzeuger dabei zunehmend eine Netzstützungsaufgabe wahrnehmen müssen, die bisher durch Großkraftwerke wahrgenommen wurde, die mittels direkt gekoppelter Synchrongeneratoren in das elektrische Versorgungsnetz einspeisen. Nicht nur die Art der Stützung durch direkt gekoppelte Synchrongeneratoren einerseits um umrichterbasierte Erzeuger andererseits unterscheidet sich, sondern auch das Verhalten des elektrischen Versorgungsnetzes insgesamt ändert sich.

Um das zu berücksichtigen, schlägt beispielsweise die Patentanmeldung US 2020/0119560 A1 vor, einen Umrichteranteil eines Netzabschnitts des elektrischen Versorgungsnetzes zu schätzen, um das Einspeisen der elektrischen Leistung daran anzupassen. Abhängig von dem geschätzten Umrichteranteil kann eine Adaption des Reglers, der das Einspeisen steuert, vorgesehen werden. Besonders kann damit die Dynamik des Reglers auf diese Netzeigenschaft angepasst werden.

Es wurde nun aber weiter erkannt, dass der Anteil umrichterbasierter Einspeiser stark schwanken kann. Ein geschätzter Umrichteranteil kann sich somit ständig verändern. Das kann zudem Auswirkungen auf die Stabilität des elektrischen Versorgungsnetzes haben. Es kommt dann hinzu, dass die Stabilität des elektrischen Versorgungsnetzes auch je nach Umrichteranteil im elektrischen Versorgungsnetz durch unterschiedliche Stützmaßnahmen sichergestellt werden kann. Besonders kann problematisch sein, dass auf Anzeichen eines potentiell drohenden Stabilitätsverlustes situationsabhängig sehr unterschiedlich reagiert werden muss. Besonders kann hier dasselbe Anzeichen, wie beispielsweise eine fluktuierende Frequenz, gleichwohl unterschiedliche Stützmaßnahmen erforderlich machen. Wird die falsche Stützmaßnahme gewählt, besteht die Gefahr, dass dem potentiell drohenden Stabilitätsverlust nicht entgegengewirkt wird, sondern dass sich die Situation vielmehr noch verschlimmern kann.

Der vorliegenden Erfindung liegt somit die Aufgabe zu Grunde, zumindest eines der oben genannten Probleme zu adressieren. Insbesondere soll eine Lösung vorgeschlagen werden, bei der durch umrichterbasierte Erzeuger, die synonym auch als umrichterbasierte Einspeiser bezeichnet werden können, eine Netzstabilisierung trotz variierender Netzeigenschaften erreicht wird. Zumindest soll zu bisher bekannten Lösungen eine alternative Lösung vorgeschlagen werden.

Erfindungsgemäß wird ein Verfahren nach Anspruch 1 vorgeschlagen. Dieses Verfahren betrifft somit ein Verfahren zum Einspeisen elektrischer Leistung in ein eine Netzspannung mit einer Netzfrequenz aufweisendes elektrisches Versorgungsnetz mittels eines umrichterbasierten Erzeugers. Der umrichterbasierte Erzeuger verwendet somit wenigstens einen Umrichter, also einen Frequenzumrichter oder einen Frequenzwechselrichter, der auch einfach als Umrichter oder Wechselrichter bezeichnet werden kann, um in das elektrische Versorgungsnetz einzuspeisen. Insbesondere wird durch diesen wenigstens einen Umrichter unmittelbar ein einzuspeisender Strom nach Amplitude, Frequenz und Phase zum Einspeisen in das elektrische Versorgungsnetz erzeugt bzw. vorbereitet. Der wenigstens eine Umrichter erzeugt also unmittelbar einen Einspeisestrom.

Der umrichterbasierte Erzeuger kann insbesondere ein Windenergiesystem sein. Ein Windenergiesystem ist dabei eine Sammelbezeichnung, die sowohl eine einzelne Windenergieanlage umfasst, die alleine in ein elektrisches Versorgungsnetz einspeist, als auch einen Windpark, der mehrere Windenergieanlagen aufweist, die gemeinsam über einen Netzanschlusspunkt in ein elektrisches Versorgungsnetz einspeisen. Es kann auch wenigstens ein elektrischer Speicher in dem umrichterbasierten Erzeuger vorgesehen sein, von dem aus elektrische Leistung in das elektrische Versorgungsnetz eingespeist wird.

Dazu wird vorgeschlagen, einen Umrichteranteil eines Netzabschnitts des elektrischen Versorgungsnetzes zu schätzen. Der Umrichteranteil ist dabei ein Verhältnis mittels Umrichter eingespeister Leistung zu insgesamt eingespeister Leistung. Weist der Netzabschnitt also, um ein einfaches anschauliches Beispiel zu nennen, als Erzeuger nur ein Kraftwerk mit direkt gekoppeltem Synchrongenerator und einen Windpark auf, wobei das Kraftwerk und der Windpark jeweils gleich viel Leistung in das elektrische Versorgungsnetz einspeisen, so beträgt in diesem Fall der Umrichteranteil den Wert 0,5 bzw. 50 %.

In dem bereits genannten Dokument US 2020/0119560 A1 sind Verfahren zum Schätzen eines Umrichteranteils beschrieben und diese Schätzverfahren können auch hier eingesetzt werden. Das Schätzen des Umrichteranteils eines Netzabschnitts erfolgt insbesondere so, dass die mittels Umrichter in diesen Netzabschnitt eingespeiste Leistung ins Verhältnis gesetzt wird zu insgesamt in diesen Netzabschnitt eingespeister Leistung.

Es wird dann vorgeschlagen, elektrische Leistung mittels des umrichterbasierten Erzeugers in das elektrische Versorgungsnetz in einem Normalmodus einzuspeisen. Dies erfolgt in Abhängigkeit vom geschätzten Umrichteranteil. Somit kann vom geschätzten Umrichteranteil abhängen, ob überhaupt im Normalmodus eingespeist wird, es kann außerdem oder alternativ aber auch der Normalmodus in Abhängigkeit vom geschätzten Umrichteranteil variiert werden, beispielsweise hinsichtlich eines Verstärkungsfaktors, oder um einen Stützmodus ergänzt werden.

Es wird dann weiter vorgeschlagen, einen ersten Stützmodus in Abhängigkeit vom geschätzten Umrichteranteil gemäß einer ersten Aktivierungsbedingung zu aktivieren. Diese Aktivierung des ersten Stützmodus kann bedeuten, dass dieser ergänzend zum Normalmodus aktiviert wird. Vorzugsweise ersetzt aber der Stützmodus den Normalmodus. Varianten des ersten Stützmodus sind weiter unten noch beschrieben. In dem ersten Stützmodus können beispielsweise konkrete Vorschriften zur Leistungsänderung in Abhängigkeit von einer Frequenzänderung vorgesehen sein.

Weiterhin wird vorgeschlagen, dass ein zweiter Stützmodus in Abhängigkeit vom geschätzten Umrichteranteil gemäß einer zweiten Aktivierungsbedingung aktiviert wird. Diese zweite Aktivierungsbedingung unterscheidet sich von der ersten Aktivierungsbedingung. Insbesondere wird also der erste Stützmodus oder der zweite Stützmodus aktiviert. Auch der zweite Stützmodus wird weiter unten noch beschrieben. Auch in dem zweiten Stützmodus kann beispielsweise eine Verhaltensweise vorgeschrieben sein, wie eine Leistungsänderung in Bezug auf eine Frequenzänderung durchzuführen ist. Die Art dieser Leistungsänderung in Abhängigkeit von einer Frequenzänderung, um bei diesem Beispiel zu bleiben, unterscheidet sich aber zwischen den beiden Stützmodi, also zwischen dem ersten Stützmodus und dem zweiten Stützmodus. Der erste Stützmodus und der zweite Stützmodus sind also auch unterschiedlich.

Es werden mit den drei Modi somit drei Bereiche vorgeschlagen. Der Einteilung in diese drei Bereiche liegt folgende Erkenntnis zu Grunde. Im Normalmodus wird die Netzregelung (fast) vollständig von den konventionellen Kraftwerken übernommen, also von den Erzeugern, die mit direkt gekoppelten Umrichtern in das elektrische Versorgungsnetz einspeisen. Das Netz wird im Wesentlichen so betrieben wie eh und je. Wie sich die Erneuerbaren Einspeiser verhalten, also die, die mittels Umrichter ins Netz einspeisen, ist kaum relevant.

In dem zweiten Bereich, also bei Aktivierung des ersten Stützmodus, haben die Erneuerbaren einen relevanten Anteil. Die Systemregelung muss aber noch die Belange der Konventionellen beachten. Stützmaßnahmen sollten die Stützwirkung konventioneller Kraftwerke mit einbeziehen, da diese einen ebenso relevanten Anteil haben. Hier ergänzen die Erneuerbaren die Eigenschaften der Konventionellen.

Im dritten Bereich, also beim Aktivieren des zweiten Stützmodus, sind die Erneuerbaren dominant. Die Systemstabilität ist nicht mehr von den verbleibenden konventionellen Kraftwerken abhängig. Stützmaßnahmen können in Extremsituationen sogar ohne die Konventionellen auskommen, diese sogar aus dem Netz verdrängen, so dass sie sich ggf. vom Netz trennen müssen. Hier können Netzzustände zugelassen werden, für die ein Großkraftwerk nicht ausgelegt ist und die es in einen Eigenschutz fallen lassen könnten. Ein solcher Netzzustand kann z.B. ein entsprechend hoher Frequenzgradient sein. Das kann aber in solchen Extremsituationen hingenommen werden.

Somit kann erreicht werden, dass Stützmaßnahmen für unterschiedliche Netzeigenschaften, nämlich besonders für unterschiedliche Umrichteranteile in dem Netzabschnitt, unterschiedlich vorgesehen sind, wobei sie bei Bedarf aktivierbar sind. Die Stützmodi sind also nicht fest installiert oder fest implementiert, sondern sie werden bei Bedarf aktiviert. Hier ist besonders zu unterscheiden zwischen der Aktivierung des ersten oder zweiten Stützmodus, die in Abhängigkeit vom geschätzten Umrichteranteil erfolgt, und dem Aktivieren einer tatsächlichen Stützmaßnahme. Der Stützmodus gibt zunächst vor, in welcher Art und Weise auf ein Ereignis, besonders eine Veränderung eines Netzzustandes, wie die Veränderung der Frequenz oder der Spannung, zu reagieren ist. Die Reaktion erfolgt aber erst, wenn sich diese Änderung des Netzzustandes einstellt. Erst dann wird in dem jeweils aktivierten Stützmodus dann die zugehörige Stützmaßnahme eingeleitet.

Hier wurde besonders erkannt, dass es wichtig ist, bei Veränderung des Umrichteranteils auch einen zugehörigen Stützmodus zu aktivieren, der dann zunächst keine Wirkung entfaltet, aber bei Bedarf sofort reagieren kann. Dabei wurde besonders erkannt, dass eine Stützmaßnahme teilweise in sehr kurzer Zeit, insbesondere im Bereich von 10 bis 40 ms, eingeleitet werden muss. In dieser Zeit ist es nicht mehr möglich, zunächst die Netzeigenschaft zu erfassen und die Stützmaßnahme darauf auszurichten. Besonders kann in dieser kurzen Zeit ein Umrichteranteil nicht mehr ermittelt werden. Daher wird ein solcher Umrichteranteil vorher ermittelt und ein entsprechender Stützmodus bereits vorher aktiviert.

Gemäß einer Ausführungsform wird vorgeschlagen, dass das Einspeisen im Normalmodus erfolgt, wenn der geschätzte Umrichteranteil unterhalb eines ersten Referenzwertes liegt, das Aktivieren des ersten Stützmodus erfolgt, wenn der geschätzte Umrichteranteil den ersten Referenzwert erreicht oder darüber liegt, und das Aktivieren des zweiten Stützmodus erfolgt, wenn der geschätzte Umrichteranteil den zweiten Referenzwert erreicht oder darüber liegt, wobei der zweite Referenzwert größer als der erste Referenzwert ist.

Somit kann der erste Stützmodus ab dem ersten Referenzwert aktiviert werden, und der zweite Stützmodus ab dem zweiten Referenzwert. Es wurde besonders erkannt, dass bei einem geringen Umrichteranteil das Einspeisen in einem Normalmodus ausreichen kann.

Insbesondere wird vorgeschlagen, dass der erste Referenzwert im Bereich von 50 - 60 % liegt und der zweite Referenzwert im Bereich von 80 - 95 %. Hier wurde besonders erkannt, dass noch bis zu einem Anteil von nur 50 % durch Umrichter eingespeister Leistung, wenn also nur die Hälfte der Leistung oder weniger durch Umrichter eingespeist wird, der Betrieb in dem Normalmodus ausreichen kann. Dieser Anteil von 50 % kann je nach weiteren Bedingungen auch bis zu 60 % reichen. Bei darüber liegendem Anteil wurde erkannt, dass das Einspeisen durch Umrichter dominant wird und durch das Aktivieren des ersten Stützmodus adressiert werden kann. Hierbei wurde erkannt, dass zumindest bis 80 % Umrichteranteil der verbleibende Anteil durch direkt gekoppelte Synchrongeneratoren eingespeister Leistung immerhin noch eine Relevanz hat. Insoweit ist der erste Stützmodus darauf abgestimmt, dass die Umrichter zwar eine gewisse Dominanz erlangt haben, die direkt gekoppelten Synchrongeneratoren aber immer noch eine wichtige Rolle spielen, oder sich zumindest nicht vom Netz trennen dürfen.

Diese kann in dem ersten Stützmodus mit berücksichtigt werden. Besonders kann hier durch die direkt gekoppelten Synchrongeneratoren noch eine Frequenzvorgabe der Netzfrequenz erfolgen. Besonders kommt hier in Betracht, dass in dem ersten Stützmodus eine Netzstützung zwar schon das dominante Verhalten der Umrichter berücksichtigt, eine Frequenzführung durch die direkt gekoppelten Synchrongeneratoren gleichwohl zu Grunde gelegt werden kann. Hier wird besonders auch berücksichtigt, dass Änderungen der Leistungsbilanz noch in der Frequenz ablesbar sind, nämlich durch die unmittelbare Reaktion der direkt gekoppelten Synchrongeneratoren. Gleichwohl wird im ersten Stützmodus berücksichtigt, dass trotz der Ablesbarkeit der Leistungsbilanz in der Frequenzänderung eine Leistungsstützung durch die direkt gekoppelten Synchrongeneratoren schwach ist.

Außerdem wurde erkannt, dass bei einem sehr hohen Anteil durch Umrichter eingespeister Leistung, der ab 80 % vorliegen kann, spätestens aber bei 95 % und darüber vorliegt, ein anderes Netzverhalten vorliegt. Besonders wurde erkannt, dass auch eine Frequenzführung durch die direkt gekoppelten Synchrongeneratoren, sofern sie überhaupt noch vorhanden sind, nicht mehr stark ist. Im Grunde kann der zweite Stützmodus berücksichtigen, dass bei einem so hohen Umrichteranteil von über 80 % oder sogar über 95 % das elektrische Versorgungsnetz sich nach Regeln verhält, die erheblich von den Regeln abweichen, die bei dominanten oder zumindest relevanten direkt gekoppelten Synchrongeneratoren vorliegen. Mit anderen Worten liegt bei einem so hohen Umrichteranteil ein Netz vor, das sich anders verhält oder verhalten kann, als das aus früheren Netzen der Fall war.

Vorzugsweise wird vorgeschlagen, dass der erste Referenzwert und/oder der zweite Referenzwert in Abhängigkeit von einer weiteren Netzeigenschaft des elektrischen Versorgungsnetzes gewählt werden. Der geschätzte Umrichteranteil ist somit eine Eigenschaft des elektrischen Versorgungsnetzes und dazu wird eine weitere Netzeigenschaft des elektrischen Versorgungsnetzes betrachtet. Hier wurde besonders erkannt, dass die erläuterten Charakteristika des elektrischen Versorgungsnetzes bzw. des Netzabschnitts nicht ausschließlich von dem geschätzten Umrichteranteil abhängen. Das Aktivieren des ersten und zweiten Stützmodus jeweils von dem geschätzten Umrichteranteil abhängig vorzunehmen ist dennoch sinnvoll und eine weitere Abhängigkeit kann dadurch berücksichtigt werden, dass der erste und/oder der zweite Referenzwert entsprechend gewählt werden.

Vorzugsweise wird in Abhängigkeit von dieser weiteren Netzeigenschaft der erste bzw. zweite Referenzwert jeweils aus einem vorgegebenen Bereich in Abhängigkeit von dieser weiteren Netzeigenschaft ausgewählt. Insbesondere kann hierfür der Bereich von 50 - 60 % für den ersten Referenzwert und der Bereich von 80 - 95 % für den zweiten Referenzwert verwendet werden. Vorzugsweise werden sowohl der erste Referenzwert als auch der zweite Referenzwert in Abhängigkeit von der weiteren Netzeigenschaft ausgewählt. Es kommt aber auch in Betracht, dass nur einer der beiden Referenzwerte in Abhängigkeit von der weiteren Netzeigenschaft ausgewählt wird. Insbesondere kann diese Netzeigenschaft ein Lastflussmaß sein. Der erste und/oder zweite Referenzwert werden demnach in Abhängigkeit von einem Lastflussmaß ausgewählt. Das Lastflussmaß ist dadurch definiert, dass es einen maximalen Leistungsfluss zwischen dem Netzabschnitt und dem verbleibenden Teil des elektrischen Versorgungsnetzes kennzeichnet. Der verbleibende Teil des elektrischen Versorgungsnetzes ist somit das elektrische Versorgungsnetz insgesamt, aber ohne den betrachteten Netzabschnitt.

Im Betrieb des elektrischen Versorgungsnetzes kann ein Leistungsausgleich vom oder zum Netzabschnitt vorkommen. Es fließt dann Leistung aus dem Netzabschnitt oder in den Netzabschnitt, was hier als Leistungsfluss bezeichnet wird. Dieser Leistungsfluss kann schwanken und er kann auch den Wert null erreichen, wenn nämlich in dem Moment kein Leistungsausgleich zwischen dem Netzabschnitt und dem verbleibenden Teil des elektrischen Versorgungsnetzes erfolgt.

Es wurde hier erkannt, dass der maximale Leistungsfluss, also der maximale Leistungsausgleich, eine Netzeigenschaft bildet und zudem das Verhalten, die Charakteristik und auch die Stabilität besonders des Netzabschnitts beeinflussen bzw. kennzeichnen kann. Ein positiver Leistungsfluss ist dann die Abgabe von Leistung, nämlich Wirkleistung, von dem Netzabschnitt in den verbleibenden Teil des elektrischen Versorgungsnetzes. Hier wurde besonders erkannt, dass bei Netzabschnitten mit einem relevanten Umrichteranteil häufig ein Netzabschnitt mit verteilten, regenerativen Erzeugern und wenig Verbrauchern vorliegt. Ein solcher Netzabschnitt exportiert daher häufig Leistung. Genau diese Eigenschaft kennzeichnet diesen Netzabschnitt auch.

Es kommt aber auch vor, dass Leistung importiert wird, also von dem verbleibenden elektrischen Versorgungsnetz in den Netzabschnitt eingespeist wird. Besonders dann, aber auch generell, kommt in Betracht, als maximalen Leistungsfluss einen Betrag anzusetzen, also das Vorzeichen außer Betracht zu lassen.

Besonders bei der Betrachtung des Betrags der Leistung kommt auch in Betracht, als maximalen Leistungsfluss denjenigen anzusetzen, der durch einen oder mehrere Übergabepunkte zwischen dem Netzabschnitt und dem verbleibenden Teil des elektrischen Versorgungsnetzes vorgegeben ist. Es kommt zwar in Betracht, dass die so vorgegebene maximal übertragbare Leistung nicht ausgenutzt wird, gleichwohl kann dies kennzeichnend für das elektrische Versorgungsnetz bzw. den Netzabschnitt sein. Vorzugsweise wird als maximaler Leistungsfluss ein normierter Wert verwendet, nämlich die maximal von dem Netzabschnitt exportierte oder importierte Leistung im Verhältnis zu insgesamt in den Netzabschnitt einspeisbarer Leistung.

Es kommt auch vor, dass der Netzabschnitt das gesamte elektrische Versorgungsnetz bildet, nämlich besonders dann, wenn das elektrische Versorgungsnetz und damit der Netzabschnitt ein Inselnetz bildet. Ein solches abgeschlossenes Netz kann besonders dann als Inselnetz bezeichnet werden, wenn die insgesamt in den Netzabschnitt und damit in das elektrische Versorgungsnetz einspeisbare Leistung 10 GW nicht überschreitet.

Im Falle eines Inselnetzes ist der maximale Leistungsfluss zwischen dem Netzabschnitt und einem verbleibenden Teil des elektrischen Versorgungsnetzes somit null, weil es keinen verbleibenden Teil des elektrischen Versorgungsnetzes gibt.

Es wurde besonders erkannt, dass somit über die Betrachtung des maximalen Leistungsflusses auch das Vorliegen eines Inselnetzes mit berücksichtigt werden kann.

Es wurde auch erkannt, dass ein hoher Leistungsfluss, wenn also viel Ausgleichsleistung bzw. Ausgleichsenergie zum oder vom Netzabschnitt fließt, auf einen Lastausgleich durch große Schwungmassen hindeutet, nämlich durch Schwungmassen direkt gekoppelter Synchrongeneratoren, die in dem verbleibenden Teil des elektrischen Versorgungsnetzes angeordnet sind. Zumindest ist die in solchen schnelldrehenden Synchrongeneratoren gespeicherte kinetische Energie groß und kann entsprechend Stützleistung bereitstellen, nämlich von außerhalb des Netzabschnitts über die Ausgleichsleistung. Das kann bei der Auswahl des ersten und/oder zweiten Referenzwertes in Abhängigkeit von dem Lastflussmaß, also in Abhängigkeit von dem maximalen Leistungsfluss, berücksichtigt werden. Besonders wird vorgeschlagen, den ersten Referenzwert und/oder den zweiten Referenzwert umso kleiner zu wählen, je größer der maximale Leistungsfluss ist bzw. je größer das Lastflussmaß ist.

Gemäß einer Ausführungsform wird vorgeschlagen, dass im ersten Stützmodus eine Emulationsfunktion aktiviert wird, die auf eine Frequenzänderung der Netzfrequenz mit einer Leistungsänderung eingespeister Leistung reagiert, wobei die Leistungsänderung als Reaktion auf die Frequenzänderung einem Verhalten einer direkt mit dem elektrischen Versorgungsnetz gekoppelten Synchronmaschine nachgebildet wird. Vorzugsweise wird eine virtuelle Schwungmasse mit einstellbarem Massenträgheitsmoment verwendet. Besonders arbeitet diese Emulationsfunktion so, dass die virtuelle Schwungmasse der aktuellen Frequenz entsprechend rotiert bzw. die Emulationsfunktion von einer entsprechenden Drehzahl der virtuellen Schwungmasse ausgeht. Einer Netzfrequenz von 50 Hz kann eine Drehzahl von 50 U/s, also 3000 U/min zugeordnet sein. Diese so rotierende virtuelle Schwungmasse weist auch einen Phasenwinkel auf, der zusammen mit einem Phasenwinkel der Netzspannung umläuft. Im stationären Zustand ergibt sich somit zwischen diesen beiden Phasenwinkeln kein Differenzwinkel bzw. dieser hat den Wert null.

Ändert sich nun die Frequenz, indem sie sich beispielsweise erhöht, so wird der Phasenwinkel der Netzspannung relativ zu dem Phasenwinkel der umlaufenden virtuellen Schwungmasse allmählich erhöht. Es ergibt sich ein Differenzwinkel und abhängig von diesem Differenzwinkel wird die Leistungseinspeisung in einem Fall verringert und die weniger eingespeiste Leistung wird in der Emulationsfunktion dazu verwendet, die virtuelle Schwungmasse zu beschleunigen. Entsprechend der hierzu verwendeten Leistung erhöht sich die kinetische Energie der virtuellen Schwungmasse. Sie beschleunigt entsprechend, nämlich entsprechend dieser zur Beschleunigung verwendeten Leistung und dem virtuellen, gegebenenfalls einstellbaren Massenträgheitsmoment. Sie beschleunigt sich also aufgrund bekannter physikalischer Zusammenhänge. Dadurch kann der Phasenwinkel der virtuellen Schwungmasse dem Phasenwinkel der Netzspannung dann wieder entsprechend nachgeführt werden. Durch die Auswahl oder gegebenenfalls Einstellung des Massenträgheitsmoments wird die Dynamik dieses Nachführens beeinflusst.

Bei umgekehrtem Vorzeichen des Differenzwinkels erhöht sich die eingespeiste Leistung und die Drehzahl der virtuellen Schwungmasse verringert sich. Der Vorschlag bedeutet somit, dass eine virtuelle Maschine hier mitläuft, insbesondere antriebsfrei als (feste) Schwungmasse mitläuft. Dadurch kann eine Stabilisierung der Frequenz erreicht werden. Im stationären Zustand ist der Differenzwinkel null.

Außerdem oder alternativ wird vorgeschlagen, dass eine bzw. die Leistungsänderung eingespeister Leistung als Reaktion auf eine Frequenzänderung durchgeführt wird, und dass für die Leistungsänderung ganz oder teilweise Energie aus Rotationsenergie wenigstens eines Rotors einer Windenergieanlage verwendet wird, wobei insbesondere durch die Leistungsänderung mehr Leistung von der Windenergieanlage eingespeist wird, als sie aus Wind erzeugt. Es wird somit im ersten Stützmodus eine Regelung vorgeschlagen, die kurzzeitig mehr Leistung in das elektrische Versorgungsnetz einspeisen kann, als aufgrund des vorherrschenden Windes erzeugt werden kann. Die hierfür notwendige (zusätzliche) Energie kann durch Rotationsenergie aus dem Rotor bereitgestellt werden. Der Rotor verlangsamt sich dabei, aber das kann für einen kurzen Zeitraum von insbesondere bis zu 30 Sekunden hingenommen werden, denn für diese Zeitspanne ist es möglich, die eingespeiste Leistung signifikant über die aus Wind erzeugte Leistung anzuheben, ohne dass sich der Rotor zu sehr verlangsamt.

Außerdem oder alternativ wird vorgeschlagen, dass im ersten Stützmodus eine Leistungsänderung eingespeister Leistung als Reaktion auf eine Frequenzänderung eine wenigstens doppelt so hohe Amplitude aufweist wie bei gleicher Frequenzänderung im normalen Modus. Hier wurde besonders erkannt, dass auch im Normalmodus vorgesehen sein kann, dass sich die eingespeiste Leistung in Abhängigkeit von einer Frequenzänderung verändert. Soweit dies in dem Normalmodus vorgesehen ist, wird hier vorgeschlagen, dass der erste Stützmodus dazu eine stärkere Verstärkung vorsieht, nämlich eine wenigstens doppelt so starke Steigung der Leistungsänderung in Abhängigkeit von einer Frequenzänderung.

Außerdem oder alternativ wird vorgeschlagen, dass im ersten Stützmodus für eine Leistungsänderung eingespeister Leistung als Reaktion auf eine Frequenzänderung keine Mindestfrequenzabweichung der Netzfrequenz von einer Referenzfrequenz vorgegeben wird, oder dass eine vorbestimmte Mindestfrequenzabweichung zumindest geringer ist als im Normalmodus. Hier wurde besonders erkannt, dass im Normalmodus ein übliches Totband für die Frequenz angesetzt werden kann. Solange sich die Regelung nur im Normalmodus befindet, solange also der Umrichteranteil entsprechend gering ist, kann von einer vergleichsweise hohen Toleranz des elektrischen Versorgungsnetzes auf eine Netzfrequenzschwankung ausgegangen werden. Es braucht dann nicht nachgeregelt zu werden. Erst wenn dieses Totband verlassen wird, wenn also eine vergleichsweise große Frequenzänderung vorliegt, würde dann reagiert werden.

Für den ersten Stützmodus wurde erkannt, dass auf eine Frequenzänderung sofort reagiert werden sollte, um damit der Charakteristik des elektrischen Versorgungsnetzes gerecht zu werden. Es kommt auch in Betracht, dass der Totbandbereich zumindest geringer ist. Insbesondere wird hier vorgeschlagen, dass der Totbandbereich der Frequenz maximal halb so groß ist wie der Totbandbereich, der dem Normalmodus zu Grunde liegt.

Hier wurde besonders erkannt, dass ein direkt gekoppelter Synchrongenerator auf eine Frequenzänderung reagiert und dabei regelmäßig kein Totband kennt, denn die Reaktion ist physikalisch bedingt. Durch zunehmenden Umrichteranteil im Netz und damit entsprechend geringem Anteil direkt gekoppelter Synchrongeneratoren im Netz nimmt diese frequenzabhängige Reaktion der direkt gekoppelten Synchrongeneratoren ab. Entsprechend wird im ersten Stützmodus vorgeschlagen, durch die Umrichter bereits auf besonders kleine Frequenzänderungen zu reagieren, um eine entsprechende schwächere Reaktion direkt gekoppelter Synchrongeneratoren auszugleichen.

Besonders wird vorgeschlagen, dass im ersten Stützmodus eine Leistungsabregelungsfunktion zur schnellen Leistungsabregelung implementiert ist, wobei die Leistungsabregelungsfunktion auf ein Anforderungssignal oder Anforderungskriterium das Einspeisen elektrischer Leistung reduziert. Hier wurde besonders erkannt, dass in manchen Fällen eine schnelle Leistungsabregelung das Netz stabilisieren kann. Eine solche schnelle Leistungsabregelung kann besonders dann relevant sein, wenn sich ein großer Verbraucher plötzlich vom Netz trennt. Eine solche Netzabtrennung kann beispielsweise bei diesem Verbraucher durch einen Schutzschalter ausgelöst sein oder aber auch, wenn sich ein Netzabschnitt mit vielen Verbrauchern vom Netz trennt. In dem Moment ist dann die Leistungsbilanz schlagartig nicht mehr ausbalanciert, und um das zu adressieren, wird diese schnelle Leistungsabregelung vorgeschlagen. Besonders wurde erkannt, dass bei einem entsprechenden Umrichteranteil, der im ersten Stützmodus vorliegt, diese umrichterbasierten Erzeuger einen entsprechenden Beitrag leisten können.

Für diese Abregelung kann ein Anforderungssignal vorgesehen sein, das beispielsweise ein Netzbetreiber überträgt, es kann aber auch die Reaktion auf einen Netzzustand sein, besonders auf eine Änderung der Netzfrequenz. Die schnelle Leistungsreduktion kann auch in Abhängigkeit von einer absoluten Frequenz erfolgen, besonders wenn die Netzfrequenz einen vorgegebenen oberen Frequenzwert überschreitet oder einen vorgegebenen unteren Frequenzwert unterschreitet.

Vorzugsweise wird vorgeschlagen, dass eine Winkelbeschleunigung erfasst wird. Die Netzspannung weist einen mit der Netzfrequenz umlaufenden Phasenwinkel auf. Für diesen Phasenwinkel kann eine Beschleunigung erfasst werden, die auch negativ sein kann. Aus dieser Beschleunigung, die somit eine Winkelbeschleunigung ist, lässt sich eine Frequenzänderung ableiten. Daher wird vorgeschlagen, die Leistungsabregelungsfunktion in Abhängigkeit von einer solchen Winkelbeschleunigung durchzuführen, nämlich in Abhängigkeit von einer positiven Winkelbeschleunigung. Dazu kann ein Beschleunigungsgrenzwert festgelegt werden, sodass die Leistungsabregelungsfunktion gestartet wird, sobald dieser Beschleunigungsgrenzwert überschritten wird. Die Leistungsabregelungsfunktion kann auch als Emulationsfunktion implementiert sein. Die vorstehend beschriebene Emulationsfunktion kann als eine solche Leistungsabregelungsfunktion ausgebildet sein.

Weiter wird vorgeschlagen, dass die Reduzierung der Leistung durch eine Reduzierungszeitkonstante gekennzeichnet ist, wobei die Reduzierungszeitkonstante eine Zeit bezeichnet, in der die Leistung um einen Nennleistungswert reduziert wird, wobei die Reduzierungszeitkonstante kleiner als 2 s ist, insbesondere kleiner als 1 s ist und weiter bevorzugt kleiner als 0,5 s ist. Weist der umrichterbasierte Erzeuger beispielsweise eine Nennleistung von 4 MW auf und ist die Reduzierungszeitkonstante beispielsweise kleiner als 1 s, so kann die Leistung von dem Nennleistungswert von 4 MW auf null in weniger als 1 s reduziert werden. Insoweit gibt die Reduzierungszeitkonstante eine Dynamik der Reduzierung an. Anschaulich gesprochen gibt sie eine Flankensteilheit für die Reduzierung der Leistung an. Diese Flankensteilheit hängt dabei nicht von der Amplitude der absoluten Reduzierung ab.

Ist also die Reduzierungszeitkonstante, um bei obigem Beispiel zu bleiben, kleiner als 1 s, und wird die Leistung in dem genannten Beispiel nur um 2 MW reduziert, so erfolgt dies in einer Zeit von weniger als 0,5 s.

Hier wurde besonders auch erkannt, dass eine solch schnelle Reduzierung mit einem umrichterbasierten Erzeuger möglich ist.

Wird als umrichterbasierter Erzeuger ein Windenergiesystem verwendet, also eine Windenergieanlage oder ein Windpark, so wird gemäß einer Variante vorgeschlagen, dass die Reduzierung der eingespeisten Leistung schneller ist als eine Reduzierung mittels des Windenergiesystems aus winderzeugter Leistung. Bei einem Abregelvorgang einer Windenergieanlage kann die Leistungsreduzierung so erfolgen, dass die Rotorblätter aus dem Wind in Richtung Fahnenstellung gedreht werden. Dadurch wird die aus dem Wind entnommene Leistung reduziert und entsprechend kann auch die in das elektrische Versorgungsnetz eingespeiste Leistung reduziert werden.

Dieser Vorgang ist zwar im Vergleich zu der Reduzierung von Großkraftwerken immer noch sehr schnell, benötigt dennoch eine gewisse Zeit. Es wird vorgeschlagen, dass die Leistungsabregelungsfunktion im ersten Stützmodus so ausgestaltet ist, dass die Leistung aber noch schneller reduziert wird. Das kann besonders dadurch erfolgen, dass dabei aus Wind zu viel erzeugte Leistung innerhalb der Windenergieanlage verbraucht wird. Gleiches gilt für einen Windpark, in dem mehrere Windenergieanlagen zugleich ihre Leistung reduzieren. Die Leistung wird also durch Verstellen der Rotorblätter reduziert und außerdem durch Verbrauch von Leistung.

Außerdem oder alternativ wird somit vorgeschlagen, dass zum Reduzieren der eingespeisten Leistung bei dieser Leistungsabregelungsfunktion des ersten Stützmodus Leistung im Windenergiesystem zusätzlich verbraucht wird, insbesondere mittels einer Chopperschaltung. Eine Chopperschaltung ist grundsätzlich bekannt, sie kann elektrische Leistung aus einem Gleichspannungszwischenkreis dadurch abführen, dass durch eine gepulste Ansteuerung Strom aus diesem Gleichspannungszwischenkreis durch einen Widerstand fließt und dort in Wärme umgewandelt wird. Hier wird vorgeschlagen, diesen Leistungsverbrauch bei der Ausgestaltung der Leistungsabregelungsfunktion mit einzubeziehen. Besonders kann die Leistungsabregelungsfunktion, die hier für den ersten Stützmodus vorgeschlagen wird, über eine Leistungsvorgabe die Leistung, also die in das elektrische Versorgungsnetz eingespeiste Leistung, vorgeben und damit auch ihre Reduzierung vorgeben. Die Reduzierung wird also so vorgegeben, dass sie nur realisiert werden kann, wenn zusätzlich Leistung im Windenergiesystem verbraucht wird.

Außerdem oder alternativ wird für diese Leistungsabregelungsfunktion des ersten Stützmodus vorgeschlagen, dass die eingespeiste Leistung auf einen Wert unter null reduziert wird, sodass das Windenergiesystem Leistung aus dem elektrischen Versorgungsnetz entnimmt und insbesondere, zumindest teilweise, mittels einer Chopperschaltung verbraucht. Es können aber auch andere Verbraucher in der Windenergieanlage oder dem Windpark zum Verbrauchen elektrischer Leistung eingesetzt werden. Beispielsweise können die Rotorblätter der Windenergieanlagen beheizt werden, obwohl es aufgrund der Außentemperatur keinen Anlass dafür gibt, um ein Beispiel zu nennen. Auch hier wird somit die Leistungsabregelungsfunktion des ersten Stützmodus entsprechend ausgebildet, nämlich so, dass sie auch zum Einspeisen negative Werte vorgeben kann. Insbesondere kann sie eine Leistungsreduzierung vorgeben, die von einem positiven eingespeisten Leistungswert eine Reduzierung bis zu negativen Werten der eingespeisten Leistung steuert.

Gemäß einer Ausgestaltung wird vorgeschlagen, dass im ersten Stützmodus eine Frequenzgradientenregelung aktiviert wird, wobei die Frequenzgradientenregelung die Leistungseinspeisung in Abhängigkeit von einer Frequenzänderung verändert, insbesondere einen Teil der eingespeisten Leistung proportional zur Frequenzänderung vorgibt. Hier wurde besonders erkannt, dass eine solche Regelung der eingespeisten Leistung in Abhängigkeit von der Frequenzänderung besonders für den ersten Stützmodus vorteilhaft ist. Im ersten Stützmodus sind noch so viele direkt gekoppelte Synchrongeneratoren an den Netzabschnitt angeschlossen, dass die Frequenz und eine Frequenzänderung eine gute Aussagekraft zu einer Leistungsänderung hat.

Gleichzeitig ist aber der Umrichteranteil bereits so hoch, dass den umrichterbasierten Erzeugern eine große Bedeutung für die Leistungsregelung zukommt. Dabei wurde erkannt, dass hierfür eine besonders schnelle frequenzabhängige Leistungsregelung sinnvoll ist und dadurch erreicht werden kann, dass die Leistungseinspeisung in Abhängigkeit von der Frequenzänderung verändert wird. Durch die Erfassung der Frequenzänderung, besonders die Erfassung eines Frequenzgradienten, kann somit nicht nur eine absolute Frequenzabweichung, also die Abweichung der Netzfrequenz von einer Netznennfrequenz, oder anderen Referenzfrequenz, erfasst werden, sondern auch eine Änderung und damit auch die Schnelligkeit der Veränderung erfasst werden.

Vorzugsweise liegt einer solchen Erfassung einer Frequenzänderung kein Totband der absoluten Frequenzabweichung zu Grunde. Wenn sich also die Frequenz selbst im Nennpunkt bzw. ausgehend vom Nennpunkt, also bei Nennfrequenz oder in unmittelbarer Nähe der Nennfrequenz schnell ändert, kann dies von dieser Frequenzgradientenregelung berücksichtigt werden. Es kann dann eine Leistungsanpassung umgesetzt werden, noch bevor die Frequenz einen Totbandbereich verlässt. Diese Regelung kann also bereits ansprechen, bevor eine Regelung, die eine absolute Abweichung der Frequenz betrachtet, aktiv wird, wenn ein Totband vorliegt.

Eine frequenzabhängige Leistungsregelung und eine Frequenzgradientenregelung können gleichzeitig wirken, wenn beispielsweise ein Teil der verfügbaren Leistungsänderung für die frequenzabhängige Regelung der Leistung verwendet wird und ein verbleibender Teil der veränderbaren Leistung für die Frequenzgradientenregelung verwendet wird.

Gemäß einer Ausführungsform wird vorgeschlagen, dass die eingespeiste Leistung in Abhängigkeit von der Netzfrequenz gemäß einer vorbestimmten Regelungsvorschrift verändert wird, und die Regelungsvorschrift eine Regelungsverstärkung aufweist und/oder durch eine Regelungsgeschwindigkeit gekennzeichnet ist, die in Abhängigkeit vom Umrichteranteil und/oder in Abhängigkeit von einem bzw. dem Lastflussmaß verändert werden. Insbesondere wird die Regelungsverstärkung umso größer eingestellt, je größer der Umrichteranteil ist, und/oder die Regelungsgeschwindigkeit wird umso schneller eingestellt, je größer der Umrichteranteil ist.

Vorzugsweise wird in Abhängigkeit von dem Lastflussmaß der Zusammenhang zwischen Regelungsverstärkung bzw. Regelungsgeschwindigkeit und dem Umrichteranteil verändert. Besonders kann eine Erhöhung der Regelungsverstärkung in Abhängigkeit von dem Umrichteranteil über einen Proportionalitätsfaktor zusammenhängen, also als Rampe ausgebildet sein. Dieser Proportionalitätsfaktor bzw. eine Steigung der Rampe kann dann in Abhängigkeit von dem Lastflussmaß verändert werden. Hier wird besonders vorgeschlagen, dass der Proportionalitätsfaktor bzw. die Steigung der Rampe umso größer ist, je kleiner das Lastflussmaß ist. Gleiches gilt für die Regelungsgeschwindigkeit, die auf gleiche Art und Weise wie die Regelungsverstärkung in Abhängigkeit von dem Umrichteranteil und in Abhängigkeit von dem Lastflussmaß eingestellt werden kann.

Hier wurde besonders erkannt, dass die frequenzabhängige Einstellung der Leistung umso stärker eingestellt wird, je größer der Umrichteranteil und je kleiner das Lastflussmaß ist. Besonders in einem Inselnetz ist der Betrag des Lastflussmaßes klein, das Lastflussmaß nämlich null. Hier kann es keinen Ausgleich durch angrenzende Netzabschnitte geben, sodass die netzfrequenzabhängige Leistungseinstellung entsprechend stärker reagieren muss, um die Regelungsmöglichkeit durch den fehlenden Lastfluss bzw. fehlenden Leistungsfluss auszugleichen. Ebenfalls sollte die frequenzabhängige Einstellung der Leistung umso stärker ausfallen, also eine umso stärkere Verstärkung aufweisen, je höher der Umrichteranteil ist, um nämlich eine entsprechende Regelungsfähigkeit durch wenige oder gar keine direkt gekoppelten Synchrongeneratoren aufzuweisen.

Gemäß einer Ausgestaltung wird vorgeschlagen, dass im zweiten Stützmodus und bei Verwendung eines Windenergiesystems eine Momentanreserveregelung aktiviert wird, bei der in Abhängigkeit von der Netzfrequenz bei Werten der Netzfrequenz unterhalb eines unteren Frequenzreferenzwertes kinetische Energie aus wenigstens einem rotierenden Rotor entnommen und in das elektrische Versorgungsnetz eingespeist wird. Somit wird vorgeschlagen, eine solche Momentanreserveregelung im zweiten Stützmodus vorzusehen, insbesondere diese nur im zweiten Stützmodus vorzusehen.

Hier wurde erkannt, dass besonders durch eine solche Momentanreserveregelung ein Ausgleich geschaffen werden kann für die verringerte Frequenzstabilisierung durch den geringen Anteil direkt gekoppelter Synchrongeneratoren an diesem Netzabschnitt. Besonders ist vorgesehen, dass die Momentanreserveregelung bei abfallender Netzfrequenz aktiviert wird. Vorzugsweise hängt ein Aktivierungsgrad der Momentanreserveregelung von einem Umrichteranteil im Netz ab. Besonders kann vorgesehen sein, dass eine maximale Aktivierung erst bei einem sehr hohen Umrichteranteil im Netz erfolgt. Eine hohe Aktivierung bedeutet hier, dass ein Zusammenhang zwischen der Frequenzabweichung, um die die Netzfrequenz unterhalb des unteren Frequenzreferenzwertes liegt, und der Leistung, die davon abhängig zusätzlich in das elektrische Versorgungsnetz eingespeist wird, durch einen Verstärkungszusammenhang, insbesondere Verstärkungsfaktor, insbesondere Proportionalitätsfaktor gekennzeichnet sein kann. Für diesen Verstärkungszusammenhang, Verstärkungsfaktor, bzw. Proportionalitätsfaktor kann ein maximaler Wert vorgesehen sein und der wird eingestellt, wenn der Aktivierungsgrad 100 % beträgt. Insbesondere kann dieser Verstärkungszusammenhang proportional zum Aktivierungsgrad gewählt werden.

Gemäß einer Ausführungsform wird vorgeschlagen, dass im zweiten Stützmodus eine Trägheitswinkelregelung aktiviert wird, wobei die Trägheitswinkelregelung ein Referenzsystem betreibt, bei dem eine virtuelle Schwungmasse mit einer der Netzfrequenz entsprechenden Drehzahl rotiert und daraus ein Referenzsignal mit einer Referenzfrequenz und einer Phasenlage in Bezug auf die Netzspannung abgeleitet wird, wobei die Rotation der virtuellen Schwungmasse einerÄnderung der Netzfrequenz nur träge folgt, sodass sich bei einer Änderung der Netzfrequenz die Phasenlage des Referenzsignals verändert und die Trägheitswinkelregelung eine Leistungseinspeisung in Abhängigkeit von der Phasenlage des Referenzsignals steuert. Insbesondere wird vorgeschlagen, dass ein Teil der eingespeisten Leistung proportional zur Phasenlage gesteuert wird. Dass die Rotation der virtuellen Schwungmasse einer Änderung der Netzfrequenz nur träge folgt, wird dadurch realisiert, dass sie der Änderung der Netzfrequenz mit einer Verzögerungsfunktion folgt. Die Verzögerungsfunktion kann insbesondere eine Verzögerungsfunktion erster Ordnung sein.

Hier wurde besonders erkannt, dass durch diese Trägheitswinkelregelung im zweiten Stützmodus der umrichterbasierte Erzeuger an das Verhalten eines direkt gekoppelten Synchrongenerators angepasst werden kann. Der zweite Stützmodus wird für einen sehr hohen Umrichteranteil vorgeschlagen, bei dem nur noch wenige oder gar keine direkt gekoppelten Synchrongeneratoren in den Netzabschnitt einspeisen, sodass ihre physikalisch bedingte Stabilisierungswirkung entfällt, zumindest stark reduziert ist. Das kann durch eine solche Trägheitswinkelregelung zumindest teilweise kompensiert werden, die somit besonders für den zweiten Stützmodus vorgeschlagen wird.

Insbesondere wird vorgeschlagen, dass die virtuelle Schwungmasse durch ein Trägheitsmoment gekennzeichnet ist, das einstellbar ist und dass die Verzögerungsfunktion eine Hochlaufzeitkonstante aufweist, die proportional zum Trägheitsmoment ist. Wird das Trägheitsmoment also beispielsweise doppelt so groß gewählt, so ist die Hochlaufzeitkonstante der Verzögerungsfunktion auch doppelt so groß. Mit anderen Worten wird das Verhalten der virtuellen Schwungmasse und damit das Referenzsystem und damit die Trägheitswinkelregelung insgesamt doppelt so träge. Dadurch kann ein Verhalten eines direkt gekoppelten Synchrongenerators nachgebildet werden und auch unterschiedlich träge Verhalten können berücksichtigt werden. Vorzugsweise wird das einstellbare Trägheitsmoment in Abhängigkeit davon eingestellt, wie groß der Anteil direkt gekoppelter Synchrongeneratoren in dem Netzabschnitt ist. Dazu wird vorgeschlagen, dass das Trägheitsmoment umso größer gewählt wird, je kleiner der Anteil direkt gekoppelter Synchrongeneratoren im Netzabschnitt ist. Dadurch kann das Fehlen direkt gekoppelter Synchrongeneratoren entsprechend stark ausgeglichen werden.

Besonders wird vorgeschlagen, dass das Trägheitsmoment in Abhängigkeit von einem Arbeitspunkt des umrichterbasierten Erzeugers gewählt wird, insbesondere dass es in Abhängigkeit von der eingespeisten Leistung gewählt wird. Durch die vom umrichterbasierten Einspeiser eingespeiste Leistung kann sein Arbeitspunkt ganz oder teilweise definiert sein, so dass die Betrachtung der eingespeisten Leistung vorgeschlagen wird. Es kann bei der Betrachtung der eingespeisten Leistung die durch die Trägheitswinkelregelung zusätzlich eingespeiste Leistung herausgerechnet werden, so dass nur die so bereinigte Leistung betrachtet wird, insbesondere die Leistung, die eingespeist wird, bevor die Trägheitswinkelregelung aktiv wird. Dadurch kann vermieden werden, dass eine instabile Regelung eintritt, bei der die Trägheitswinkelregelung zu einer höheren Leistung führt, die zu einem erhöhten Trägheitsmoment führt, das wiederum die Leistung weiter erhöht. Die instabile Regelung kann aber auch durch eine geeignete Parametrierung vermieden werden.

Hier wurde besonders erkannt, dass die Anpassung des virtuellen Trägheitsmomentes an den Arbeitspunkt erreichen kann, dass die Trägheitswinkelregelung umso stärker ist, je größer die eingespeiste Leistung ist, je einflussreicher also in dem Moment der umrichterbasierte Einspeiser ist. Insbesondere wird daher vorgeschlagen, das Trägheitsmoment umso größer zu wählen, je größer die von dem umrichterbasierten Einspeiser eingespeiste Leistung ist.

Gemäß einer Ausgestaltung wird vorgeschlagen, dass im zweiten Stützmodus eine von der Netzspannung abhängige Leistungseinspeisung vorgesehen ist, die eine eingespeiste Leistung oder einen Teil davon in Abhängigkeit von einer Spannungsabweichung der Netzspannung von einer Referenzspannung, insbesondere in Abhängigkeit von einer Netznennspannung, vorgibt und einspeist. Hier wurde besonders erkannt, dass der zweite Stützmodus gewählt wird, wenn der Anteil direkt gekoppelter Synchrongeneratoren in dem Netzabschnitt gering ist. Direkt gekoppelte Synchrongeneratoren weisen üblicherweise auch spannungsprägende Eigenschaften auf. Durch den geringen Anteil direkt gekoppelter Synchrongeneratoren in dem Netzabschnitt ist diese spannungsprägende Eigenschaft somit auch abgeschwächt. Das kann durch die netzspannungsabhängige Leistungseinspeisung zumindest teilweise kompensiert werden. Durch die netzspannungsabhängige Leistungseinspeisung kann somit eine Spannungsstabilisierung erreicht werden.

Es wird darauf hingewiesen, dass hier eine von der Netzspannung abhängige Wirkleistungseinspeisung vorgeschlagen wird. Damit kann die Netzspannung insgesamt stabilisiert oder sogar vorgegeben werden. Das unterscheidet sich besonders von einer netzspannungsabhängigen Blindleistungseinspeisung - die zusätzlich vorgesehen sein kann -, die eine Netzspannung eher in Bezug auf eine konkrete, insbesondere lange Leitung beeinflusst, nämlich besonders einen Spannungsabfall entlang dieser langen Leitung kompensiert.

Insbesondere wird vorgeschlagen, dass ein Leistungsteil der eingespeisten Leistung proportional zur Spannungsabweichung vorgegeben und eingespeist wird. Grundsätzlich soll Leistung, also Wirkleistung, auch dann eingespeist werden, wenn keine Spannungsabweichung vorliegt, schließlich ist das Sinn eines Erzeugers. Zur Spannungsstützung wird aber vorgeschlagen, dass ein Teil der eingespeisten Leistung, nämlich der genannte Leistungsteil, für diesen Regelungszweck eingesetzt wird und damit der Leistungsteil proportional zur Spannungsabweichung vorgegeben und eingespeist wird. Das kommt dann also zu der ansonsten eingespeisten Wirkleistung hinzu bzw. wird abgezogen, je nach Vorzeichen.

Durch die zur Spannungsabweichung proportionale Vorgabe kann besonders eine schnelle Reaktion auf Spannungsabweichungen erreicht werden.

Vorzugsweise wird vorgeschlagen, dass zusätzlich ein weiterer Teil der eingespeisten Leistung in Abhängigkeit von einem integralen Teil der Spannungsabweichung vorgegeben und eingespeist wird. Hier wird also vorgeschlagen, dass zumindest teilweise bzw. unter Berücksichtigung von Grenzwerten die Spannungsabweichung über die Zeit aufintegriert wird. Abhängig davon, insbesondere proportional dazu, wird der weitere Teil der eingespeisten Leistung vorgegeben und eingespeist. Dadurch können stationäre Spannungsabweichungen auch dauerhaft ausgeregelt werden.

Gemäß einer Ausführungsform wird vorgeschlagen, dass im zweiten Stützmodus eine von der Netzspannung abhängige Blindleistungseinspeisung vorgesehen ist, die die eingespeiste Blindleistung oder einen Teil davon in Abhängigkeit von einer Spannungsabweichung der Netzspannung von einer Referenzspannung, insbesondere in Abhängigkeit von einer Netznennspannung, vorgibt und einspeist, wobei wenigstens ein Teil der eingespeisten Blindleistung in Abhängigkeit von einem integralen Teil der Spannungsabweichung, insbesondere proportional dazu, vorgegeben und eingespeist wird.

Hier wurde besonders erkannt, dass der zweite Stützmodus verwendet wird, wenn Erzeuger, die die Netzspannung auf einen Spannungssollwert führen, kaum noch vorhanden sind, so dass die Spannung dann nicht mehr oder nun noch schlecht auf den vorgegebenen Spannungswert, insbesondere auf die Nennspannung geführt wird. Bekannte spannungsstützende Maßnahmen, die von Windenergieanlagen ausgeführt werden, sprechen nur außerhalb eines Toleranzbandes an und können keine stationäre Genauigkeit erreichen. Sie können die Spannung allenfalls in das Toleranzband zurückführen, aber meist nicht auf den Spannungssollwert. Diese Situation kann durch die nun vorgeschlagene Regelung verbessert werden.

Gemäß einer Ausführungsform wird vorgeschlagen, dass im zweiten Stützmodus eine Vorhalteleistung aktiviert wird, bei der eine Vorhalteleistung als Leistungsreserve vorgehalten wird, indem der umrichterbasierte Erzeuger um eine Drosselleistung betrieben wird. Hier wurde besonders erkannt, dass der sehr hohe Umrichteranteil, bei dem der zweite Stützmodus ausgewählt wird, auch meist bedeutet, dass ein Großteil der Leistung aus regenerativen Quellen stammt, nämlich insbesondere aus Wind- und Solarenergie. Solche Erzeuger arbeiten klassischerweise im sogenannten Netzparallelbetrieb. Das bedeutet, dass sie so viel Leistung in das elektrische Versorgungsnetz einspeisen wie aufgrund der regenerativen Energiequelle in dem Moment möglich ist, also abhängig von vorherrschenden Wind und der vorhandenen Solarleistung. Diese Systeme können ihre Leistung somit nicht oder nur unter besonderen Bedingungen erhöhen. Das wird üblicherweise durch direkt gekoppelte Synchrongeneratoren ausgeglichen, die üblicherweise zu nicht regenerativen Energiequellen gehören und damit bei Bedarf ihre Leistung erhöhen können, sofern sie nicht bereits Maximalleistung einspeisen.

Dies kann dadurch ausgeglichen werden, dass die umrichterbasierten Erzeuger gedrosselt betrieben werden, also so betrieben werden, dass sie eine Vorhalteleistung bereithalten. Eine Vorhalteleistung bereitzuhalten bedeutet, regenerative Energie zu verschenken. Daher wird ein solcher Betriebsmodus möglichst vermieden. Es wurde aber erkannt, dass im zweiten Stützmodus ein solcher Betrieb angezeigt sein kann.

Insbesondere wenn der umrichterbasierte Erzeuger ein Windenergiesystem ist, wird vorgeschlagen, dass dieses in Höhe der Drosselleistung weniger Leistung aus dem Wind erzeugt als aufgrund eines vorherrschenden Windes möglich wäre, um bei Bedarf den gedrosselten Betrieb zu verlassen und die eingespeiste Leistung um die Drosselleistung, oder einen Teil davon, zu erhöhen. Dadurch wird besonders erreicht, dass diese Leistungserhöhung auch dauerhaft möglich ist, wenn auch zu dem Preis, dass Leistung verschenkt wird. Zum Erreichen der Stabilisierung des elektrischen Versorgungsnetzes kann ein solcher Nachteil aber hinnehmbar sein. Daher wird er besonders nur im zweiten Stützmodus vorgeschlagen.

Gemäß einer Ausgestaltung wird vorgeschlagen, dass im zweiten Stützmodus ein Spannungsprägungsmodus aktiviert wird. Umrichterbasierte Erzeuger werden üblicherweise stromprägend betrieben. Sie erhalten einen Stromsollwert und speisen diesen in das elektrische Versorgungsnetz ein. Eine Spannungsprägung wird üblicherweise von direkt gekoppelten Synchrongeneratoren durchgeführt, die eine solche spannungsprägende Eigenschaft physikalisch bedingt aufweisen.

Eine Spannungsprägung bzw. einen spannungsprägenden Modus für umrichterbasierte Erzeuger vorzusehen kann besonders so realisiert werden, dass eine entsprechend andere Regelung implementiert ist, wobei vorzugsweise zwischen stromprägender Regelung und spannungsprägender Regelung gewechselt werden kann; der hier vorgeschlagene spannungsprägende Modus muss somit nicht dauerhaft vorliegen, kann also aktiviert werden und entsprechend auch deaktiviert werden. Jedenfalls kann die Regelung, die zu diesem spannungsprägenden Modus führt, einen Spannungswert vorgeben und die Einspeisung wird dann entsprechend so geregelt, dass dieser Spannungswert erreicht wird.

Hier ist besonders zu beachten, dass ein spannungsprägender Modus für einen umrichterbasierten Erzeuger bedeuten kann, dass sehr viel Regelungsleistung benötigt wird. Entsprechend muss auch viel Regelungsleistung, also entsprechend viel Wirkleistung, für diesen Modus bereitgehalten werden. Das ist zwar möglich, aber ineffizient, sodass es möglichst vermieden wird. Hier wurde aber erkannt, dass im zweiten Stützmodus, bei dem eine Spannungsprägung durch direkt gekoppelte Synchrongeneratoren nur schwach oder gar nicht vorhanden ist, dies hinnehmbar ist, um eine Stabilisierung sicherstellen zu können. Daher wird dieser Spannungsprägungsmodus besonders im zweiten Stützmodus vorgeschlagen.

Vorzugsweise wird vorgeschlagen, dass der umrichterbasierte Erzeuger mehrere Wechselrichter zum Erzeugen jeweils eines Teils der eingespeisten Leistung aufweist. Dazu wird vorgeschlagen, dass bei Aktivierung des Spannungsprägungsmodus wenigstens einer der Wechselrichter von einem stromprägenden Betrieb in einen spannungsprägenden Betrieb wechselt. Insoweit kann der spannungsprägende Betrieb, der hier den Betrieb jeweils eines einzelnen Wechselrichters betrifft, alternativ auch als spannungsprägender Modus dieses einzelnen Wechselrichters bezeichnet werden.

Jedenfalls kann hierdurch erreicht werden, dass ein Spannungsprägungsmodus aktiviert wird, ohne dass aber der gesamte umrichterbasierte Erzeuger mit allen Wechselrichtern nur noch im spannungsprägenden Modus arbeitet. Stattdessen arbeitet der umrichterbasierte Erzeuger teilweise spannungsprägend. Hier liegt besonders der Gedanke zu Grunde, dass nicht nur ein umrichterbasierter Erzeuger, sondern viele umrichterbasierte Erzeuger, insbesondere alle in diesen Netzabschnitt einspeisenden umrichterbasierten Erzeuger teilweise, also einen oder mehrere ihrer Wechselrichter, in den stromprägenden Betrieb ändern. In der Summe vieler so arbeitender umrichterbasierter Erzeuger kann damit wirkungsvoll eine Spannungsprägung erreicht werden und der geringe Anteil direkt gekoppelter Synchrongeneratoren hinsichtlich der Spannungsprägung ausgeglichen werden.

Besonders wird vorgeschlagen, dass bei Aktivierung des Spannungsprägungsmodus eine Anzahl zum Einspeisen verwendeter Wechselrichter in einen spannungsprägenden Betrieb wechselt und die Anzahl von dem geschätzten Umrichteranteil abhängt und/oder mehrere umrichterbasierte Erzeuger vorgesehen sind und bei Aktivierung des Spannungsprägungsmodus wenigstens einer der umrichterbasierten Erzeuger in den spannungsprägenden Betrieb wechselt und die Anzahl der umrichterbasierten Erzeuger, die in den spannungsprägenden Betrieb wechseln, von dem geschätzten Umrichteranteil abhängt.

Hierdurch kann eine klare Wahl getroffen werden, wie viele einzelne Wechselrichter, oder wie viele umrichterbasierte Erzeuger in den spannungsprägenden Betrieb wechseln, um dadurch den Spannungsprägungsmodus zu realisieren. Hier wird besonders vorgeschlagen, dass umso mehr Wechselrichter bzw. umso mehr umrichterbasierte Erzeuger in den spannungsprägenden Betrieb wechseln sollen, je größer der Umrichteranteil ist. Damit wird auch quantitativ eine einfache Vorgabe geschaffen, wie die verringerte oder fehlende Spannungsprägung durch direkt gekoppelte Synchrongeneratoren ausgeglichen werden kann.

Gemäß einer Ausführungsform ist ein dritter Stützmodus vorgesehen, der ergänzend zum Normalmodus aktivierbar ist und/oder der aktivierbar ist, wenn der Umrichteranteil den ersten Referenzwert nicht erreicht. Der dritte Stützmodus kann also parallel zum Normalmodus arbeiten, oder, bezogen auf den Umrichteranteil, nach dem Normalmodus vorgesehen sein. In diesem Fall wäre der Normalmodus nur für kleine Umrichteranteile vorgesehen, beispielsweise bis 20 % oder 30 % Umrichteranteil.

Im dritten Stützmodus ist vorgesehen, dass eine niederfrequente Schwingung im elektrischen Versorgungsnetz erfasst wird, die insbesondere eine Schwingung einer Amplitude der Netzspannung bezeichnet, die eine geringere Frequenz als eine Netznennfrequenz aufweist. Besonders kann, um es anschaulich zu erläutern, eine Schwingung des Effektivwertes der Netzspannung vorliegen. Die niederfrequente Schwingung kann insbesondere einen Bereich von 0,02 Hz bis 25 Hz erreichen, insbesondere von 0,1 Hz -bis 10 Hz.

Es wird zudem vorgeschlagen, eine Bedämpfung der erfassten niederfrequenten Schwingung durchzuführen. Somit wird eine solche gezielte Erfassung niederfrequenter Schwingung und Bedämpfung dieser Schwingungen in dem dritten Stützmodus bei einem vergleichsweise geringen Umrichteranteil vorgeschlagen.

Es wurde besonders erkannt, dass solche niederfrequenten Schwingungen durch direkt mit dem Netzabschnitt gekoppelte Synchrongeneratoren hervorgerufen sein können. Solche direkt gekoppelten Synchrongeneratoren können schwingen und dann zu solchen niederfrequenten Schwingungen führen. Hier wurde erkannt, dass ein solches Schwingen besonders dann relevant ist und gegebenenfalls sogar zum Aufschwingen neigt, wenn direkt gekoppelte Synchrongeneratoren die dominanten Einspeiser des Netzabschnitts sind. Daherwird vorgeschlagen, diesen dritten Stützmodus bei geringem Umrichteranteil und damit hohem Anteil direkt gekoppelter Synchrongeneratoren zu verwenden und dann die Erfassung der niederfrequenten Schwingungen und ihre Bedämpfung durchzuführen.

Hier wurde besonders erkannt, dass es vorteilhaft sein kann, im ersten und/oder zweiten Stützmodus eine solche Erfassung niederfrequenter Schwingungen mit anschließender Bedämpfung nicht durchzuführen. Dadurch kann dann nämlich vermieden werden, dass andere Regelungskonzepte, die im ersten und/oder zweiten Stützmodus wichtiger sind, in den Hintergrund gedrängt oder abgeschwächt werden. Zudem ist zu berücksichtigen, sollten niederfrequente Schwingungen in relevantem Maß auch für einen hohen Umrichteranteil auftreten, dass diese möglicherweise andere Ursachen haben und daher möglicherweise auch anders bedämpft werden müssen. Bei der Bedämpfung im dritten Stützmodus kann bei solchen niederfrequenten Schwingungen davon ausgegangen werden, dass diese durch die direkt gekoppelten Synchrongeneratoren verursacht sind und entsprechend kann die Bedämpfung daran angepasst werden.

Die Bedämpfung kann besonders so durchgeführt werden, dass elektrische Leistung antizyklisch zur erfassten niederfrequenten Schwingung eingespeist wird. Insbesondere kann elektrische Leistung in einer oszillierenden Weise eingespeist werden, indem besonders einer eingespeisten Grundleistung ein schwingendes Leistungssignal überlagert wird, sodass die Amplitude der eingespeisten Leistung um einen Wert schwingt. Diese schwingende Amplitude schwingt dabei mit einer Frequenz, die der Frequenz der niederfrequenten Schwingung entspricht, und zudem eine Phasenlage aufweist, die gegenüber einer Phasenlage der niederfrequenten Schwingung verschoben ist.

Das genannte antizyklische Schwingen entspräche somit einer Phasenverschiebung um 180°. Es kommt dabei in Betracht, dass ein Winkel von 180° nicht ideal ist, sondern der Winkel kann auch im Bereich von 90° liegen. Ein geeigneter Winkel, um den die Phasenlage der schwingenden Leistung gegenüber der niederfrequenten Schwingung im Netz verschoben ist, um ein gutes Dämpfungsergebnis zu erhalten, kann durch Simulation ermittelt werden.

Gemäß einer Ausführungsform wird vorgeschlagen, dass unter den nicht mittels Umrichter einspeisenden Erzeugern eine dominierende Kraftwerksart des Netzabschnitts erfasst wird, wobei als Kraftwerksart nicht mittels Umrichter einspeisender Erzeuger wenigstens zwischen einem Grundlastkraftwerk und einem Regelkraftwerk unterschieden wird, insbesondere wenigstens_zwischen einem Kernkraftwerk, einem Kohlekraftwerk, einem Gaskraftwerk und einem Wasserkraftwerk unterschieden wird, und diejenige Kraftwerksart die dominierende Kraftwerksart bildet, die unter den nicht mittels Umrichter einspeisenden Erzeugern die meiste Leistung in den Netzabschnitt einspeisen kann. Ein Grundlastkraftwerk ist eines, das eine Grundlast versorgt, also langfristig, insbesondere wenigstens über Tage, einen im Wesentlichen festen Leistungswert einspeist und für diesen größere Änderungen nur über einen längeren Zeitraum vorgesehen sind. Änderungen der eingespeisten Leistung um mehr als 50%, bezogen auf Nennleistung, bedürfen einer Zeit von mehreren Stunden. Kernkraftwerke und Kohlekraftwerke können als Grundlastkraftwerk angesehen werden. Im Gegensatz dazu ist ein Regelkraftwerk eines, das seine Leistungseinspeisung schnell ändern kann. Eine Änderung der Leistung von über 50%, bezogen auf Nennleistung, sind in weniger als einer Stunde möglich, oftmals in einer Viertelstunde. Gaskraftwerke und Wasserkraftwerke können als Regelkraftwerke angesehen werden.

Als Unterscheidung zwischen einem Grundlastkraftwerk und einem Regelkraftwerk kann somit auch zwischen einem Kernkraftwerk oder einem Kohlekraftwerk als Grundlastkraftwerk einerseits, und einem Gaskraftwerk oder einem Wasserkraftwerk als Regelkraftwerk andererseits unterschieden werden. Nachfolgend werden Erläuterungen zu den genannten vier einzelnen Kraftwerken gegeben, die sinngemäß auf eine entsprechende Klassifizierung nach Grundlastkraftwerk einerseits und Regelkraftwerk andererseits übertragbar ist. Merkmale und Vorschläge, die zu einem Kernkraftwerk oder einem Kohlekraftwerk geschrieben wurden, sind somit auch auf ein Grundlastkraftwerk anwendbar. Merkmale und Vorschläge, die zu einem Gaskraftwerk oder einem Wasserkraftwerk geschrieben wurden, sind somit auch auf ein Regelkraftwerk anwendbar.

Dazu wird nun vorgeschlagen, dass in Abhängigkeit von der dominierenden Kraftwerksart der erste, zweite und gegebenenfalls dritte Stützmodus ausgewählt wird und/oder wenigstens eine Ergänzungsregelung ausgewählt und eingesetzt wird.

Es wird also zunächst vorgeschlagen, die Erzeuger in Kraftwerksarten zu klassifizieren, die nicht zu den umrichterbasierten Erzeugern gehören. Beträgt der Umrichteranteil also beispielsweise 70 %, so werden die Erzeuger der verbleibenden 30 % entsprechend klassifiziert. Hier wurden besonders vier relevante Kraftwerksarten, die synonym auch als Kraftwerkstypen bezeichnet werden können, identifiziert, deren Verhalten sich teilweise grundlegend unterscheiden kann, sodass hier eine gesonderte Berücksichtigung vorgeschlagen wird.

Als dominierende Kraftwerksart wird diejenige betrachtet, die die meiste Leistung einspeisen kann. Speist also beispielsweise ein Kernkraftwerk mit 4 GW Nennleistung ein und zwei Kohlekraftwerke mit je 3 GW Nennleistung, und sind sonst keine nicht mittels Umrichter einspeisende Erzeuger vorhanden, bildet dann die Kraftwerksart Kohlekraftwerk die dominierende Kraftwerksart. Von einer einspeisbaren Leistung wird allerdings nur dann ausgegangen, wenn das jeweilige Kraftwerk tatsächlich auch an den Netzabschnitt angeschlossen ist und elektrische Leistung einspeist, auch wenn diese nicht ihre Nennleistung aufweist. Dann kann aber die Nennleistung als einspeisbare Leistung betrachtet werden.

Abhängig von der so festgestellten dominierenden Kraftwerksart wird dann vorgeschlagen, den ersten, zweiten und gegebenenfalls dritten Stützmodus auszuwählen, oder gegebenenfalls eben auch nicht auszuwählen und nur den Normalmodus zu verwenden. Diese Auswahl des betreffenden Stützmodus kann auch dadurch erfolgen, dass die Aktivierungsbedingung in Abhängigkeit von der dominierenden Kraftwerksart eingestellt wird. Insbesondere wird vorgeschlagen, dass hierfür der erste und/oder zweite Referenzwert in Abhängigkeit von der dominierenden Kraftwerksart eingestellt wird.

Außerdem oder alternativ wird vorgeschlagen, dass wenigstens eine Ergänzungsregelung in Abhängigkeit von der dominierenden Kraftwerksart ausgewählt und eingesetzt wird. Beispielsweise kommen hier auch Ergänzungsregelungen in Betracht, die nur oder speziell für einen der Stützmodi vorgesehen sind. Beispielsweise kann das Aktivieren eines Spannungsprägungsmodus eine solche Ergänzungsregelung sein. Auch das Aktivieren einer Vorhaltesteuerung kann das Auswählen und Einsetzen einer solchen Ergänzungsregelung sein. Auch eine Leistungsabregelungsfunktion zur schnellen Leistungsabregelung kann eine Ergänzungsregelung sein.

So wurde erkannt, dass ein Kernkraftwerk eine stetige, Leistung einspeist, die möglichst nicht schnell verändert werden sollte. Das Netz kann dadurch stabilisiert werden, ein solches Kernkraftwerk sollte aber auf Leistungssprünge, wenn beispielsweise ein großer Verbraucher sich plötzlich vom Netz trennt, möglichst nicht schnell reagieren. Entsprechend wird besonders dann, wenn die dominierende Kraftwerksart ein Kernkraftwerk ist, vorgeschlagen, eine Leistungsabregelungsfunktion zur schnellen Leistungsabregelung zu implementieren. Das kann auch dann sinnvoll sein, wenn ein solches Kraftwerk mit seiner Mindestbelastung betrieben wird, oder kurz darüber, die ein weiteres Abregeln nicht zulässt. Außerdem oder alternativ wird vorgeschlagen, eher den ersten Stützmodus zu wählen. Entsprechend wird vorgeschlagen, den ersten Referenzwert eher niedrig und den zweiten Referenzwert eher hoch zu wählen, damit eher der erste Stützmodus ausgewählt wird.

Ein Kohlekraftwerk verhält sich eher ähnlich zu einem Kernkraftwerk und kann ebenfalls eine stabile Leistung einspeisen, die wiederum auch nur sehr langsam verändert werden kann. Dabei kann ein Kohlekraftwerk im Vergleich zu einem Kernkraftwerk seinen Betrieb noch etwas schneller ändern, bzw. eine schnelle Änderung ist weniger schädlich für das Kraftwerk. Somit wird, wenn die dominierende Kraftwerksart ein Kohlekraftwerk ist, vorgeschlagen, wie beim Kernkraftwerk eher den ersten Stützmodus auszuwählen und/oder eine Leistungsabregelungsfunktion zur schnellen Leistungsabregelung zu implementieren. Im Vergleich zum Kernkraftwerk als dominierende Kraftwerksart kann beim Kohlekraftwerk als dominierende Kraftwerksart vorzugsweise eine Reglerparametrierung, besonders bei einer schnellen Leistungsabregelung, vorgenommen werden, die zu einer langsameren Reaktion führt. Es können also größere Zeitkonstanten bzw. kleinere Reglerverstärkungen ausgewählt werden.

Sowohl bei einem Kernkraftwerk als auch bei einem Kohlekraftwerk als dominierende Kraftwerksart wird zudem vorgeschlagen, eine Vorhaltesteuerung zu aktivieren, um auf Leistungssprünge von Verbrauchern im Netz reagieren zu können. Besonders ein plötzlich erhöhter Leistungsbedarf, welcher über den von den Kraftwerken auf einfache Art und Weise bereitgestellten Reservebedarf hinausgeht, der durch ein zugeschaltetes Kraftwerk entstehen kann, kann dadurch berücksichtigt werden.

Ist ein Gaskraftwerk die dominierende Kraftwerksart, so braucht keine Vorhaltesteuerung vorgesehen zu sein, denn ein Gaskraftwerk kann sehr schnell, jedenfalls im Vergleich zu einem Kernkraftwerk und einem Kohlekraftwerk, seine Leistung erhöhen oder verringern und weist ein breiteres Band zur Leistungsflexibilität auf. Darüber hinaus ist eine stabilisierende Wirkung eines Gaskraftwerkes möglicherweise größer, sodass diese von den umrichterbasierten Erzeugern erst später übernommen werden muss. Somit wird besonders vorgeschlagen, bei einem Gaskraftwerk als dominierende Kraftwerksart keinen Spannungsprägungsmodus zu aktivieren und/oder später den zweiten Stützmodus auszuwählen, also den zweiten Referenzwert höher zu wählen.

Ein Wasserkraftwerk ist von den genannten nicht mittels Umrichter einspeisenden Erzeugern die Kraftwerksart, die zumindest im Durchschnitt am schnellsten ihre Leistung ändern kann, wobei hier anders als bei den anderen Kraftwerken eine lange Totzeit vorzusehen ist. Entsprechend kann auch hier, ähnlich wie bei dem Gaskraftwerk als dominierende Kraftwerksart, auf eine Vorhaltesteuerung verzichtet werden und/oder eine Spannungsprägung vorgesehen sein. Im Vergleich zum Gaskraftwerk als dominierende Kraftwerksart kann für das Wasserkraftwerk als dominierende Kraftwerksart grundsätzlich eine Reglerparametrierung vorgesehen sein, die zu einem schnelleren Regler als beim Gaskraftwerk führt. Um die Totzeit zu überbrücken, kann aber eine virtuelle Schwungmassenbereitstellung, oder eine schnelle Regelleistungsbereitstellung in den ersten Sekunden, insbesondere in den ersten 10 insbesondere in den ersten 5 Sekunden vorgesehen werden. Das kann besonders durch die Emulationsfunktion oder die Trägheitswinkelregelung erreicht werden.

Besonders für den dritten Stützmodus wird vorgeschlagen, dass die Bedämpfung der niederfrequenten Schwingung von der dominierenden Kraftwerksart abhängig oder in Abhängigkeit einer Gewichtung der vorhandenen Kraftwerkstypen durchgeführt wird. Besonders die Amplitude einer schwingenden Leistung, die zur Bedämpfung eingespeist wird, kann in Abhängigkeit von der dominierenden Kraftwerksart angepasst werden. Vorzugsweise ist sie bei einem Wasserkraftwerk als dominierende Kraftwerksart am größten, bei einem Gaskraftwerk als dominierende Kraftwerksart am zweitgrößten, bei einem Kohlekraftwerk als dominierende Kraftwerksart am drittgrößten und bei einem Kernkraftwerk als dominierende Kraftwerksart am geringsten. Ähnlich kann ein Differenzwinkel zwischen einem Phasenwinkel dieser schwingenden Leistung und der niederfrequenten Schwingung im Netz in Abhängigkeit von der dominierenden Kraftwerksart eingestellt werden.

Es wurde besonders erkannt, dass eine Empfindlichkeit gegen Pendelungen für Kraftwerke unterschiedlicher Kraftwerksart unterschiedlich sein kann. Besonders empfindlich können Wasserkraftwerke sein, weil sie durch die Pendelungen Druckstöße in der Wassersäule erfahren können. Am zweit empfindlichsten können Gasturbinen sein, weil die Pendelungen auf Verdichterpumpen wirken können und eine starke Beschleunigung der Schaufeln hervorrufen können. Unter die Kraftwerksart der Gasturbinen können auch Gas- und Dampf-Kombikraftwerke (GuD) gefasst werden, wobei ihre Empfindlichkeit noch etwas geringer sein kann.

Kohlekraftwerke haben eine noch geringere Empfindlichkeit und die von Kernkraftwerken ist unter den Kraftwerken am geringsten. Davon unabhängig kann zusätzlich die jeweilige Größe, insbesondere Nennleistung, der jeweiligen Kraftwerksblöcke berücksichtigt werden.

Erfindungsgemäß wird auch ein Windenergiesystem vorgeschlagen, nämlich ein Windenergiesystem zum Einspeisen elektrischer Leistung in ein eine Netzspannung mit einer Netzfrequenz aufweisendes elektrisches Versorgungsnetz, wobei das Windenergiesystem als umrichterbasierter Erzeuger ausgebildet ist, umfassend:
- eine Schätzeinrichtung zum Schätzen eines Umrichteranteils eines Netzabschnitts des elektrischen Versorgungsnetzes, wobei der Umrichteranteil ein Verhältnis mittels Umrichter eingespeister Leistung zu insgesamt eingespeister Leistung bezeichnet,
- eine Einspeiseeinrichtung zum Einspeisen elektrischer Leistung in das elektrische Versorgungsnetz in einem Normalmodus in Abhängigkeit vom geschätzten Umrichteranteil,
- eine Steuerungseinrichtung, vorbereitet zum Aktivieren eines ersten Stützmodus in Abhängigkeit vom geschätzten Umrichteranteil gemäß einer ersten Aktivierungsbedingung, und
- vorbereitet zum Aktivieren eines zweiten Stützmodus in Abhängigkeit vom geschätzten Umrichteranteil gemäß einer zweiten Aktivierungsbedingung, die zur ersten Aktivierungsbedingung verschieden ist.

Eine Schätzeinrichtung kann dabei als Computer oder Prozessrechner ausgebildet sein. Für die Schätzeinrichtung kommt auch in Betracht, dass sie eine Schnittstelle aufweist, über die sie Informationen über den Umrichteranteil erhält.

Die Einspeiseeinrichtung kann besonders als Wechselrichtereinrichtung ausgebildet sein, die elektrische Leistung aus Wind in einem Gleichspannungszwischenkreis erhält und von diesem in das elektrische Versorgungsnetz einspeist. Eine solche Wechselrichtereinrichtung, besonders zusammen mit dem Gleichspannungszwischenkreis und einem Gleichrichter zum Speisen des Gleichspannungszwischenkreises, bildet somit einen Umrichter. Dadurch ist das Windenergiesystem als umrichterbasierter Erzeuger ausgebildet. Ein umrichterbasierter Erzeuger kann synonym auch als umrichterbasierter Einspeiser bezeichnet werden.

Die Steuerungseinrichtung kann besonders als Prozessrechner ausgebildet sein und die Steuerungseinrichtung kann die Schätzeinrichtung beinhalten. Die Steuerungseinrichtung weist besonders Steuerungen oder Regelungen zur Umsetzung des jeweiligen Stützmodus auf, die als Software implementiert sein können.

Vorzugsweise ist das Windenergiesystem dazu eingerichtet, wenigstens ein Verfahren gemäß einer der vorstehenden Ausführungsformen eines Verfahrens zum Einspeisen umzusetzen. Insbesondere wird vorgeschlagen, dass die entsprechenden Schritte in der Steuerungseinrichtung implementiert sind. Lediglich das konkrete Ausführen des Einspeisens durch die Einspeiseeinrichtung erfolgt nicht durch die Steuerungseinrichtung, sondern durch einen entsprechenden Wechselrichter bzw. Umrichter, der aber durch die Steuerungseinrichtung gesteuert werden kann. Die Verfahrensschritte können besonders als Softwareprogramme oder Programmteile in dem Windenergiesystem, insbesondere in der Steuerungseinrichtung, implementiert sein. Lediglich das konkrete Einspeisen ist in der Einspeiseeinrichtung implementiert.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt ein Diagramm zur Veranschaulichung der Aktivierung verschiedener Regelungen in Abhängigkeit von einem Umrichteranteil.
- Figur 4: zeigt ein Diagramm zur Veranschaulichung der Aktivierung weiterer Regelungen in Abhängigkeit von einem Umrichteranteil.

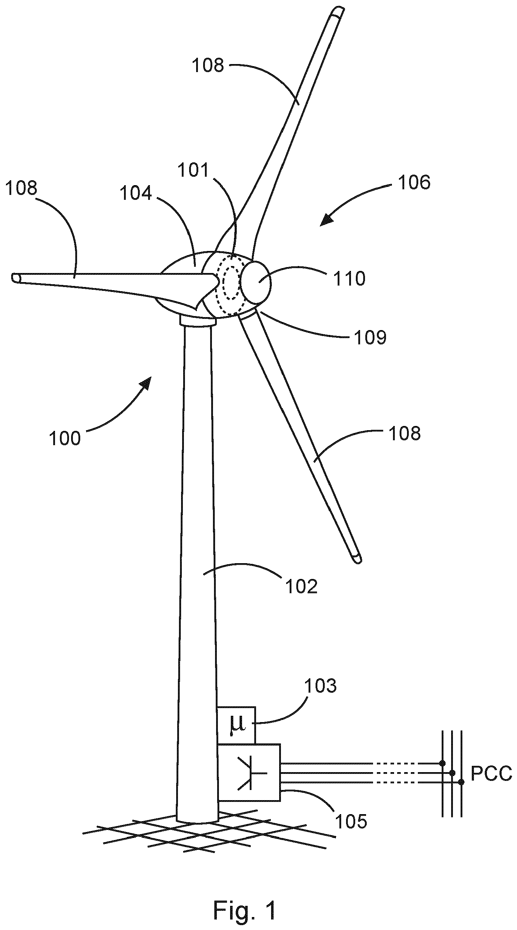

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen, die auch synonym als Steuerungseinrichtung bezeichnet werden kann. Die Anlagensteuerung 103 kann auch Vorgabewerte von extern, insbesondere von einem zentralen Parkrechner erhalten.

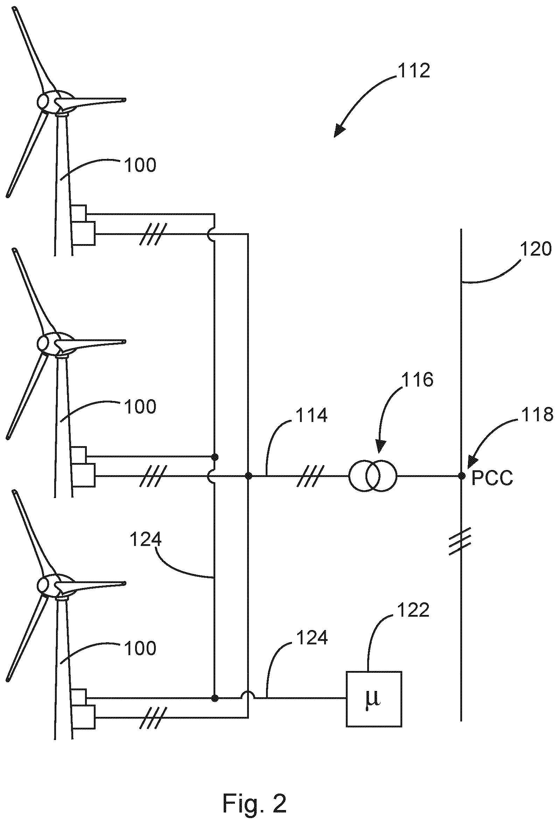

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung oder als Steuerungseinrichtung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

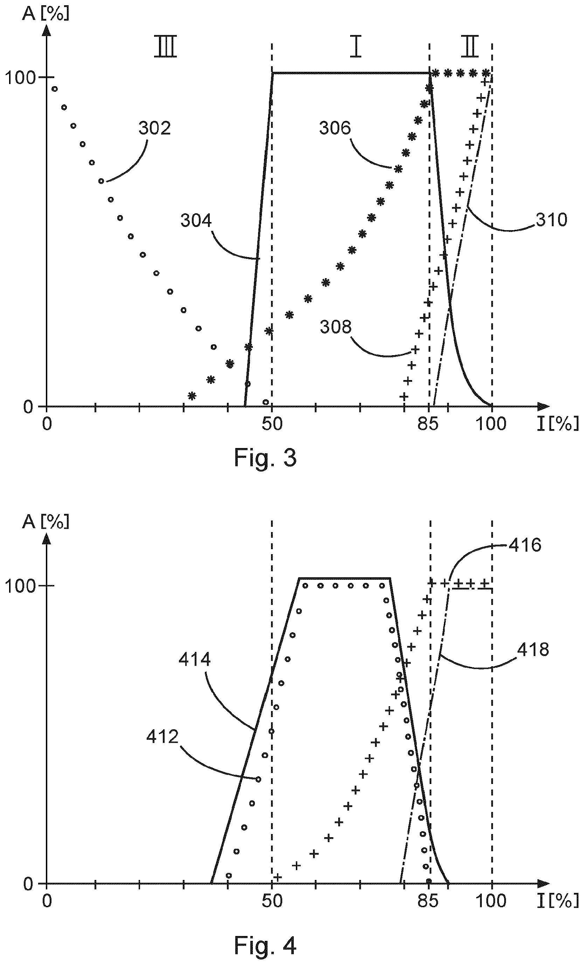

Figur 3 zeigt ein Diagramm, in dem an der Abszisse ein Umrichteranteil in Prozent exemplarisch aufgetragen ist. Die Ordinate veranschaulicht einen Aktivierungsgrad von 0 % bis 100 %. Damit wird angezeigt, dass manche Regelungen in unterschiedlicher Stärke aktiviert werden können. Besonders kann das bedeuten, dass Regelungen einer schwachen Aktivierung, also von wenigen Prozent, eine entsprechend schwache Reglerverstärkung aufweisen, bis hin zu einer maximal vorzusehenden Reglerverstärkung, die durch 100 % angezeigt wird. In anderen Fällen, besonders bei der Aktivierung einer Spannungsprägung, kann durch den Aktivierungsgrad gezeigt werden, wie viele Elemente, insbesondere wie viele Wechselrichter, die entsprechenden Regelungen aufweisen. Besonders für die Spannungsprägung kann vorgesehen sein, dass ein oder mehrere Wechselrichter eine Spannungsprägung durchführen. Die maximal vorzusehende Anzahl von Wechselrichtern für eine solche Spannungsprägung entspricht dann dem Aktivierungsgrad von 100 %.

In dem Beispiel der Figur 3 bildet ein Umrichteranteil von 50 % den ersten Referenzwert und ein Umrichteranteil von 85 % den zweiten Referenzwert.

Somit liegt hier der erste Stützmodus in dem Bereich zwischen 50 % und 85 %, der zweite Stützmodus im Bereich von 85 -100 % und der dritte Stützmodus im Bereich von 0 - 50 %. Für den dritten Stützmodus wurde hier somit vorgeschlagen, dass dieser ergänzend zum Normalmodus aktiviert wird, der somit ebenfalls im Bereich von 0 - 50 % liegt.

Im dritten Stützmodus ist dabei eine Bedämpfung niederfrequenter Schwingungen als Bedämpfungsregelung vorgesehen. Diese ist durch einen Graphen 302 gezeigt. Es ist somit zu erkennen, dass diese Schwingungsbedämpfungsregelung 302 nur im dritten Stützmodus vorgesehen ist und ihr Aktivierungsgrad nimmt von einem Umrichteranteil von 0 % bis zu einem Umrichteranteil von 50 % von 100 % auf 0 % ab. Die Schwingungsbedämpfungsregelung wird somit nur vorgeschlagen, wenn ein großer Anteil direkt gekoppelter Synchrongeneratoren als schwingungsfähige Systeme im Netzabschnitt vorhanden ist und entsprechend das Netzverhalten bestimmt. Die Abnahme des Aktivierungsgrades kann hier proportional zu einer Amplitude eines oszillierend aufgeschalteten Leistungssignals sein. Bei 100 % hat diese oszillierende Leistungsamplitude somit den Maximalwert, der bis auf null absinken kann.

Für eine Frequenzgradientenregelung 304 ist in Figur 3 der Verlauf ihres Aktivierungsgrads eingezeichnet. Diese Frequenzgradientenregelung wird somit im ersten Stützmodus vorgeschlagen. Dort wird sie zu 100 % aktiviert. Diese Frequenzgradientenregelung verändert die Leistungseinspeisung in Abhängigkeit von einem Frequenzgradienten. Insoweit verhindert die Frequenzgradientenregelung zu große Frequenzgradienten, wirkt ihnen zumindest entgegen.

Diese Frequenzgradientenregelung 304 ist im Grunde nur im ersten Stützmodus vorgesehen. Es sind lediglich Übergangsbereiche vorgesehen, bei denen ein Aktivierungsgrad für die Frequenzgradientenregelung noch im Bereich des Normalmodus bzw. dritten Stützmodus von null auf 100 % ansteigt und im zweiten Stützmodus von 100 % auf null abfällt. Der Aktivierungsgrad von 100 % für die Frequenzgradientenregelung 304 in dem Diagramm der Figur 3 bedeutet besonders, dass ein Verstärkungsfaktor zwischen Frequenzgradienten und davon abhängig einzuspeisender Leistung einen Maximalwert annimmt.

In Figur 3 ist ein Graph 306 für eine Vorhaltesteuerung eingezeichnet. Bei dieser Vorhaltesteuerung wird eine Vorhalteleistung als Leistungsreserve vorgehalten, indem der umrichterbasierte Erzeuger um eine Drosselleistung gedrosselt betrieben wird. Bei einem Aktivierungsgrad von 100 % wird somit die meiste Vorhalteleistung bereitgestellt. Die kann beispielsweise 10 % oder 20 % der Nennleistung des umrichterbasierten Erzeugers betragen, aber auch auf aktuell einspeisbare Leistung durch den umrichterbasierten Erzeuger bezogen sein. Wird hier, um bei dem einen Beispiel zu bleiben, beispielsweise ein maximaler Wert von 20 % vorgesehen, bedeutet ein Aktivierungsgrad von 100 %, dass 20 % der Leistung als Vorhalteleistung bereitgestellt wird, die Anlage also um 20 % reduziert betrieben wird. Beträgt der Aktivierungsgrad 50 %, so wird entsprechend die Anlage nur um 10 % reduziert betrieben.

Diese Vorhaltesteuerung 306 ist somit mit dem Maximalwert für den zweiten Stützmodus vorgesehen. Im ersten Stützmodus kann die Vorhaltesteuerung 306 allmählich mit steigendem Umrichteranteil ebenfalls erhöht werden, um dann beim Übergang zum zweiten Stützmodus den Aktivierungsgrad von 100 % zu erreichen. Es kommt auch in Betracht, dass bereits im Normalmodus bzw. im dritten Stützmodus eine Vorhaltesteuerung 306 bereits mit einem geringen Aktivierungsgrad aktiviert ist.

Mit 308 ist ein Graph einer Aktivierung einer integralen Spannungsregelung eingezeichnet. Die integrale Spannungsregelung 308 ist eine Regelung, bei der ein Leistungsteil der eingespeisten Leistung in Abhängigkeit von einem integralen Teil einer Spannungsabweichung eingespeist wird, insbesondere proportional zu diesem integralen Teil eingespeist wird. Hierdurch wird durch die angepasste Leistungseinspeisung eine Spannungsregelung, zumindest Spannungsstabilisierung oder wenigstens Beeinflussung, erreicht. Der hierfür bei der integralen Spannungsregelung vorgesehene integrale Teil ist besonders für den zweiten Stützmodus vorgesehen. Er kann bei einem geringen Aktivierungsgrad bereits im ersten Stützmodus beginnen. Der Aktivierungsgrad bezeichnet hier eine Reglerverstärkung, die bei einem Aktivierungsgrad von 100 % maximal ist. Diese Reglerverstärkung kann besonders ein Proportionalitätsfaktor zwischen dem integralen Anteil und der davon abhängig zusätzlich eingespeisten Leistung bilden. Bei einem Aktivierungsgrad von 100 % ist dieser Verstärkungsfaktor bzw. Proportionalitätsfaktor maximal und bei einem Aktivierungsgrad von 0 % ist er null.

Die Spannungsregelung wird besonders vorgeschlagen, um die Spannung wieder in das Nennspannungsband zurückzuführen. Als Problem wurde erkannt, dass bei steigendem Umrichteranteil die Sensitivität der Spannung im Netz auf Blindleistungsänderungen steigt und oftmals keine Einspeiser im Netz sind, die die Spannung ins Band zurückfahren. Das kann besonders darin begründet sein, dass nur eine dynamische Netzstützung mit ausschließlich proportionalem Anteil und Totband vorhanden ist, die bei Abweichungen innerhalb des Totbandes gar nicht regelt und bei darüberhinausgehenden Abweichungen keine stationäre Genauigkeit erreicht.

Figur 3 veranschaulicht zudem einen Spannungsprägungsmodus durch den Graph 310. Dieser Spannungsprägungsmodus ist in dem zweiten Stützmodus vorgesehen und kann auch synonym einfach als Spannungsprägung oder Spannungsprägungsregelung bezeichnet werden. Diese Spannungsprägung ist vorzugsweise, wie in Figur 3 dargestellt, nur für den zweiten Stützmodus vorgesehen und sie wird zu Beginn des zweiten Stützmodus, also bei dem kleinsten Umrichteranteil des zweiten Stützmodus, von einem Aktivierungsgrad von 0 % auf einen Aktivierungsgrad von 100 % für einen Umrichteranteil von 100 % erhöht.

Der Aktivierungsgrad bedeutet hier besonders, wie viele Wechselrichter in dem Spannungsprägungsmodus spannungsprägend arbeiten. Bei einem Aktivierungsgrad von 100 % arbeitet also die maximale Anzahl von Wechselrichtern spannungsprägend, die von allen umrichterbasierten Erzeugern des Netzabschnitts potentiell zur Spannungsprägung vorgesehen sind. In einem Beispiel kann das auch bedeuten, was als eine bevorzugte Ausführungsform vorgeschlagen wird, dass bei einem Aktivierungsgrad von 100 % sämtliche Wechselrichter bzw. Umrichter spannungsprägend arbeiten. Vorzugsweise sind aber nicht alle Wechselrichter der umrichterbasierten Erzeuger dafür vorgesehen, sondern beispielsweise nur die Hälfte aller Wechselrichter bzw. Umrichter, und in dem Fall entspricht ein Aktivierungsgrad von 100 % dann dem Fall, bei dem die Hälfte aller Wechselrichter spannungsprägend arbeiten. Hier wurde erkannt, dass im zweiten Stützmodus der Anteil direkt gekoppelter Synchrongeneratoren sehr gering ist, bei einem Umrichteranteil von 100 % sogar null ist, und daher die Eigenschaft der Spannungsprägung durch die umrichterbasierten Erzeuger bzw. einen Teil davon realisiert wird.

Figur 4 zeigt ein weiteres Diagramm von Regelungsvorschriften, die besonders in Abhängigkeit von dem Umrichteranteil vorgeschlagen werden und auch davon abhängig eingezeichnet sind. Das Diagramm der Figur 4 ist wie das Diagramm der Figur 3 aufgebaut und zur Veranschaulichung wurden auch der erste und der zweite Referenzwert wie im Beispiel der Figur 3 gewählt, nämlich mit 50 % bzw. 85 %. Figur 4 unterscheidet sich von Figur 3 insoweit nur darin, dass andere Regelungszusammenhänge dargestellt sind, die aber gleichzeitig mit den Regelungszusammenhängen aktiviert werden können, die in Figur 3 gezeigt sind. Figur 4 wurde insoweit nur gewählt, um Figur 3 nicht zu überladen.

Figur 4 zeigt einen Aktivierungsgrad einer Emulationsfunktion 412. Diese Emulationsfunktion 412 wird besonders im ersten Stützmodus aktiviert. Ein Aktivierungsgrad von 100 % kann bedeuten, dass eine virtuelle Schwungmasse einen maximalen Wert annimmt, der maximal für diese Emulationsfunktion vorgesehen ist. Bei einem Aktivierungsgrad von 0 % ist somit der Wert der virtuellen Schwungmasse null und die Emulationsfunktion ist dadurch deaktiviert.

Weiterhin ist in Figur 4 der Graph einer Leistungsabregelungsfunktion zur schnellen Leistungsabregelung dargestellt und mit dem Bezugszeichen 414 versehen. Diese Leistungsabregelungsfunktion 414 kann auch als schnelle Leistungsabregelungsfunktion bezeichnet werden. Bei einem Aktivierungsgrad von 100 % weist diese Leistungsabregelungsfunktion 414 eine maximale Leistungsabregelung auf, die den schnellstmöglichen Wert, also die höchste Dynamik aufweist, die implementiert werden kann. Insbesondere kann dies bspw. ein Wert sein, bei dem die Leistung doppelt so schnell reduziert wird wie eine Eingangsleistung des entsprechenden umrichterbasierten Erzeugers reduziert werden kann. Insbesondere wird hier ein Windenergiesystem vorgesehen, und ein Aktivierungsgrad von 100 % kann bedeuten, dass die Leistung, die in das elektrische Versorgungsnetz eingespeist wird, doppelt so schnell reduziert wird wie das Windenergiesystem die Entnahme der Leistung aus Wind reduzieren kann.

Die schnelle Leistungsabregelungsfunktion 414 ist ebenfalls für den ersten Stützmodus vorgesehen und kann insbesondere einen ähnlichen Aktivierungszusammenhang in Abhängigkeit von dem Umrichteranteil zeigen wie die Emulationsfunktion 412. Beide erreichen im Bereich des ersten Stützmodus die volle Aktivierung, also den Aktivierungsgrad 100%.

In Figur 4 ist auch eine frequenzabhängige Leistungsregelung 416 berücksichtigt und ihr Aktivierungsgrad in Abhängigkeit von dem Umrichteranteil durch den Graphen 416 veranschaulicht. Sie steuert eine zusätzlich einzuspeisende Leistung mit einer Amplitude, die gemäß einem frequenzabhängigen Verstärkungsfaktor proportional zu einer Frequenzabweichung ist. Die frequenzabhängige Leistungsregelung ist, zumindest als vollständige Aktivierung, nur für den zweiten Stützmodus vorgesehen. Ein 100%iger Aktivierungsgrad kann bedeuten, dass ein frequenzabhängiger Verstärkungsfaktor, der einen Zusammenhang zwischen Frequenzabweichung und zusätzlich eingespeister Leistung herstellt, einen Maximalwert aufweist. Dieser kann bis zu einem Aktivierungsgrad von 0 % entsprechend auf null reduziert werden. Damit wäre die frequenzabhängige Leistungsregelung dann nicht mehr implementiert. Vorzugsweise kann ein solcher geringerer Aktivierungsgrad der frequenzabhängigen Leistungsregelung 416 im ersten Stützmodus vorgesehen sein. Es ist aber auch möglich, dass eine frequenzabhängige Leistungsregelung 416 auch im Normalmodus bzw. im dritten Stützmodus vorgesehen ist, insbesondere mit entsprechend geringer Verstärkung, also entsprechend geringem Aktivierungsgrad, oder großen Totbändern.

Vorzugsweise wird vorgeschlagen, dass eine Trägheitswinkelregelung mit einem Aktivierungsgrad aktiviert wird, der denselben Verlauf wie der Aktivierungsgrad 416 der frequenzabhängigen Leistungsregelung aufweist. Besonders wurde erkannt, dass die Trägheitswinkelregelung ebenfalls eine von der Frequenz abhängige Regelung ist und dabei bei ähnlichen oder gleichen Bedingungen wie die frequenzabhängige Leistungsregelung benötigt wird.

Figur 4 zeigt auch einen bevorzugten Aktivierungsverlauf einer Momentanreserveregelung 418. Eine maximale Aktivierung von 100 % kann bei der Momentanreserveregelung bedeuten, dass ein maximaler Verstärkungsfaktor gewählt wird, der einen Zusammenhang zwischen aus kinetischer Energie zusätzlich eingespeister elektrischer Leistung und einer Frequenzabweichung bezeichnet. Als Frequenzabweichung wird hierbei der Wert angesehen, um den die Netzfrequenz unterhalb eines unteren Frequenzreferenzwertes liegt. Die Aktivierung der Momentanreserveregelung 418 ist besonders für den zweiten Stützmodus vorgesehen und erreicht hier den Wert 100 %.

Nur aus zeichnerischen Gründen liegt hier der Graph der Momentanreserveregelung 418 etwas unter dem der frequenzabhängigen Leistungsregelung 416. Tatsächlich sollen aber beide Graphen in dem gezeigten Beispiel den Maximalwert von 100 % erreichen. Die Momentanreserveregelung 418 kann vorzugsweise ausschließlich in dem zweiten Stützmodus aktiviert werden. Die Aktivierung kann aber auch in den ersten Stützmodus hineinreichen bzw. dort starten, insbesondere mit geringen Aktivierungsgraden, sodass der Aktivierungsgrad erst im zweiten Stützmodus, also oberhalb des zweiten Referenzwertes, über 50% liegt.

Eine Ausführungsform, die mit den übrigen Ausführungsformen kombinierbar ist, betrifft ein Verfahren zum Einspeisen elektrischer Leistung in ein eine Netzspannung mit einer Netzfrequenz aufweisendes elektrisches Versorgungsnetz mittels eines umrichterbasierten Erzeugers, insbesondere mittels eines Windenergiesystems, umfassend die Schritte:
- Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet,
- Einspeisen elektrischer Leistung in das elektrische Versorgungsnetz in einem Normalmodus in Abhängigkeit vom geschätzten Umrichteranteil,
- Aktivieren eines ersten Stützmodus in Abhängigkeit vom geschätzten Umrichteranteil gemäß einer ersten Aktivierungsbedingung,
- Aktivieren eines zweiten Stützmodus in Abhängigkeit vom geschätzten Umrichteranteil gemäß einer zweiten Aktivierungsbedingung, die zur ersten Aktivierungsbedingung verschieden ist.

Eine weitere Ausführungsform, die mit den übrigen Ausführungsformen kombinierbar ist, betrifft ein
Windenergiesystem zum Einspeisen elektrischer Leistung in ein eine Netzspannung mit einer Netzfrequenz aufweisendes elektrisches Versorgungsnetz, wobei das Windenergiesystem als umrichterbasierter Erzeuger ausgebildet ist, umfassend:
- eine Schätzeinrichtung zum Schätzen eines Umrichteranteils eines Netzabschnitts des elektrischen Versorgungsnetzes, wobei der Umrichteranteil ein Verhältnis mittels Umrichter eingespeister Leistung zu insgesamt eingespeister Leistung bezeichnet,
- eine Einspeiseeinrichtung zum Einspeisen elektrischer Leistung in das elektrische Versorgungsnetz in einem Normalmodus in Abhängigkeit vom geschätzten Umrichteranteil,
- eine Steuerungseinrichtung, vorbereitet zum Aktivieren eines ersten Stützmodus in Abhängigkeit vom geschätzten Umrichteranteil gemäß einer ersten Aktivierungsbedingung, und
- vorbereitet zum Aktivieren eines zweiten Stützmodus in Abhängigkeit vom geschätzten Umrichteranteil gemäß einer zweiten Aktivierungsbedingung, die zur ersten Aktivierungsbedingung verschieden ist.

## Patentansprüche

1. Verfahren zum Einspeisen elektrischer Leistung in ein eine Netzspannung mit einer Netzfrequenz aufweisendes elektrisches Versorgungsnetz (120) mittels eines umrichterbasierten Erzeugers (100, 112), insbesondere mittels eines Windenergiesystems (100, 112), umfassend die Schritte:
- Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet,
- Einspeisen elektrischer Leistung in das elektrische Versorgungsnetz (120) in einem Normalmodus in Abhängigkeit vom geschätzten Umrichteranteil,
- Aktivieren eines ersten Stützmodus in Abhängigkeit vom geschätzten Umrichteranteil gemäß einer ersten Aktivierungsbedingung,
- Aktivieren eines zweiten Stützmodus in Abhängigkeit vom geschätzten Umrichteranteil gemäß einer zweiten Aktivierungsbedingung, die zur ersten Aktivierungsbedingung verschieden ist,
**dadurch gekennzeichnet, dass** im ersten Stützmodus
- eine Leistungsabregelungsfunktion (414) zur schnellen Leistungsabregelung implementiert ist, wobei die Leistungsabregelungsfunktion (414) auf ein Anforderungssignal oder Anforderungskriterium das Einspeisen elektrischer Leistung reduziert, und
- die Reduzierung der Leistung durch eine Reduzierungszeitkonstante gekennzeichnet ist, wobei die Reduzierungszeitkonstante eine Zeit bezeichnet, in der die Leistung um einen Nennleistungswert reduziert wird, wobei die Reduzierungszeitkonstante kleiner als 2, 1 oder 0,5 Sekunden ist, und/oder, dass
- bei Verwendung eines Windenergiesystems (100, 112) als umrichterbasierter Erzeuger (100, 112) die Reduzierung der eingespeisten Leistung schneller ist als eine Reduzierung mittels des Windenergiesystems (100, 112) aus Wind erzeugter Leistung, und/oder dass
- zum Reduzieren der eingespeisten Leistung Leistung im Windenergiesystem (100, 112) zusätzlich verbraucht wird, insbesondere mittels einer Chopperschaltung, und/oder dass
- die eingespeiste Leistung auf einen Wert unter null reduziert wird, sodass das Windenergiesystem (100, 112) Leistung aus dem elektrischen Versorgungsnetz (120) entnimmt und insbesondere, zumindest teilweise, mittels einer Chopperschaltung verbraucht.

2. Verfahren nach Anspruch 1, **dadurch gekennzeichnet, dass**
- das Einspeisen im Normalmodus erfolgt, wenn der geschätzte Umrichteranteil unterhalb eines ersten Referenzwertes liegt,
- das Aktivieren des ersten Stützmodus erfolgt, wenn der geschätzte Umrichteranteil den ersten Referenzwert erreicht, oder darüber liegt, und
- das Aktivieren des zweiten Stützmodus erfolgt, wenn der geschätzte Umrichteranteil einen zweiten Referenzwert erreicht, oder darüber liegt, wobei der zweite Referenzwert größer als der erste Referenzwert ist, wobei insbesondere
- der erste Referenzwert im Bereich von 50-60% liegt, und/oder der zweite Referenzwert im Bereich von 80-95%.

3. Verfahren nach Anspruch 1 oder 2, **dadurch gekennzeichnet, dass**
- der erste Referenzwert und/oder der zweite Referenzwert in Abhängigkeit von einer weiteren Netzeigenschaft des elektrischen Versorgungsnetzes (120) gewählt werden, insbesondere
- in Abhängigkeit von einem Lastflussmaß, das einen maximalen Leistungsfluss zwischen dem Netzabschnitt und dem verbleibenden Teil des elektrischen Versorgungsnetzes (120) kennzeichnet.

4. Verfahren nach einem der vorstehenden Ansprüche, **dadurch gekennzeichnet, dass** im ersten Stützmodus
- eine Emulationsfunktion (412) aktiviert wird, die auf eine Frequenzänderung der Netzfrequenz mit einer Leistungsänderung eingespeister Leistung reagiert, wobei die Leistungsänderung als Reaktion auf die Frequenzänderung einem Verhalten einer direkt mit dem elektrischen Versorgungsnetz (120) gekoppelten Synchronmaschine nachgebildet wird, wobei vorzugsweise eine virtuelle Schwungmasse mit einstellbarem Massenträgheitsmoment verwendet wird, und/oder
- eine bzw. die Leistungsänderung eingespeister Leistung als Reaktion auf eine Frequenzänderung durchgeführt wird, und für die Leistungsänderung ganz oder teilweise Energie aus Rotationsenergie wenigstens eines Rotors (106) einer Windenergieanlage (100) verwendet, wobei insbesondere durch die Leistungsänderung mehr Leistung von der Windenergieanlage (100) eingespeist wird, als sie aus Wind erzeugt, und/oder
- eine Leistungsänderung eingespeister Leistung als Reaktion auf eine Frequenzänderung eine wenigstens doppelt so hohe Amplitude aufweist wie bei gleicher Frequenzänderung im Normalmodus, und/oder
- für eine Leistungsänderung eingespeister Leistung als Reaktion auf eine Frequenzänderung keine Mindestfrequenzabweichung der Netzfrequenz von einer Referenzfrequenz vorgegeben wird, oder dass eine vorbestimmte Mindestfrequenzabweichung zumindest geringer ist, als im Normalmodus.

5. Verfahren nach einem der vorstehenden Ansprüche, **dadurch gekennzeichnet, dass** im ersten Stützmodus eine Frequenzgradientenregelung (304) aktiviert wird, wobei die Frequenzgradientenregelung (304) die Leistungseinspeisung in Abhängigkeit von einem Frequenzgradienten verändert, der eine Frequenzänderung pro Zeit quantitativ beschreibt, insbesondere einen Teil der eingespeisten Leistung proportional zur Frequenzänderung vorgibt.

6. Verfahren nach einem der vorstehenden Ansprüche, **dadurch gekennzeichnet, dass**
- im zweiten Stützmodus eine frequenzabhängige Leistungsregelung (416) aktiviert wird, bei der die eingespeiste Leistung in Abhängigkeit von der Netzfrequenz gemäß einer vorbestimmten Regelungsvorschrift verändert wird, und die Regelungsvorschrift eine Regelungsverstärkung aufweist und/oder durch eine Regelungsgeschwindigkeit gekennzeichnet ist, die in Abhängigkeit vom Umrichteranteil und/oder in Abhängigkeit von einem bzw. dem Lastflussmaß verändert werden, und/oder dass
- im zweiten Stützmodus und bei Verwendung eines Windenergiesystems (100, 112) eine Momentanreserveregelung (418) aktiviert wird, bei der in Abhängigkeit von der Netzfrequenz bei Werten der Netzfrequenz unterhalb eines unteren Frequenzreferenzwertes kinetische Energie aus wenigstens einem rotierenden Rotor (106) entnommen und in das elektrische Versorgungsnetz (120) eingespeist wird.

7. Verfahren nach einem der vorstehenden Ansprüche, **dadurch gekennzeichnet, dass** im zweiten Stützmodus eine Trägheitswinkelregelung aktiviert wird, wobei
- die Trägheitswinkelregelung ein Referenzsystem betreibt, bei dem eine virtuelle Schwungmasse mit einer der Netzfrequenz entsprechenden Drehzahl rotiert und
- daraus ein Referenzsignal mit einer Referenzfrequenz und einer Phasenlage in Bezug auf die Netzspannung abgeleitet wird, wobei
- die Rotation der virtuellen Schwungmasse einer Änderung der Netzfrequenz mit einer Verzögerungsfunktion folgt, sodass
- sich bei einer Änderung der Netzfrequenz die Phasenlage des Referenzsignals verändert und
- die Trägheitswinkelregelung eine Leistungseinspeisung in Abhängigkeit von der Phasenlage des Referenzsignals steuert, insbesondere
- einen Teil der eingespeisten Leistung proportional zur Phasenlage steuert, und/oder
- die virtuelle Schwungmasse durch ein Trägheitsmoment gekennzeichnet ist, das einstellbar ist, und
- die Verzögerungsfunktion eine Hochlaufzeitkonstante aufweist, die proportional zum Trägheitsmoment ist, wobei vorzugsweise
- das Trägheitsmoment in Abhängigkeit von einem Arbeitspunkt des umrichterbasierten Erzeugers (100, 112) insbesondere in Abhängigkeit von der eingespeisten Leistung gewählt wird.

8. Verfahren nach einem der vorstehenden Ansprüche, **dadurch gekennzeichnet, dass** im zweiten Stützmodus
- eine von der Netzspannung abhängige Leistungseinspeisung vorgesehen ist, die die eingespeiste Leistung oder einen Teil davon in Abhängigkeit von einer Spannungsabweichung der Netzspannung von einer Referenzspannung, insbesondere in Abhängigkeit von einer Netznennspannung, vorgibt und einspeist, wobei insbesondere
- ein Leistungsteil der eingespeisten Leistung proportional zur Spannungsabweichung vorgegeben und eingespeist wird, und insbesondere
- zusätzlich ein weiterer Teil der eingespeisten Leistung in Abhängigkeit von einem integralen Teil der Spannungsabweichung, insbesondere proportional dazu, vorgegeben und eingespeist wird.

9. Verfahren nach einem der vorstehenden Ansprüche, **dadurch gekennzeichnet, dass** im zweiten Stützmodus
- eine von der Netzspannung abhängige Blindleistungseinspeisung (308) vorgesehen ist, die die eingespeiste Blindleistung oder einen Teil davon in Abhängigkeit von einer Spannungsabweichung der Netzspannung von einer Referenzspannung, insbesondere in Abhängigkeit von einer Netznennspannung, vorgibt und einspeist, wobei
- wenigstens ein Teil der eingespeisten Blindleistung in Abhängigkeit von einem integralen Teil der Spannungsabweichung, insbesondere proportional dazu, vorgegeben und eingespeist wird.

10. Verfahren nach einem der vorstehenden Ansprüche, **dadurch gekennzeichnet, dass** im zweiten Stützmodus eine Vorhaltesteuerung (306) aktiviert wird, bei der eine Vorhalteleistung als Leistungsreserve vorgehalten wird, indem der umrichterbasierte Erzeuger (100, 112) um eine Drosselleistung gedrosselt betrieben wird, insbesondere das Windenergiesystem (100, 112) in Höhe der Drosselleistung weniger Leistung aus Wind erzeugt, als aufgrund eines vorherrschenden Windes möglich wäre, um bei Bedarf den gedrosselten Betrieb zu verlassen und die eingespeiste Leistung um die Drosselleistung, oder einen Teil davon, zu erhöhen.

11. Verfahren nach einem der vorstehenden Ansprüche, **dadurch gekennzeichnet, dass** im zweiten Stützmodus ein Spannungsprägungsmodus (310) aktiviert wird, wobei insbesondere der umrichterbasierte Erzeuger (100, 112) mehrere Wechselrichter zum Erzeugen jeweils eines Teils der eingespeisten Leistung aufweist und bei Aktivierung des Spannungsprägungsmodus (310) wenigstens einer der Wechselrichter von einem stromprägenden Betrieb in einen spannungsprägenden Betrieb wechselt.

12. Verfahren nach einem der vorstehenden Ansprüche, **dadurch gekennzeichnet, dass** bei Aktivierung eines bzw. des Spannungsprägungsmodus (310) eine Anzahl zum Einspeisen verwendeter Wechselrichter in einen spannungsprägenden Betrieb wechselt und die Anzahl von dem geschätzten Umrichteranteil abhängt und/oder mehrere umrichterbasierte Erzeuger (100, 112) vorgesehen sind und bei Aktivierung des Spannungsprägungsmodus (310) wenigstens einer der umrichterbasierten Erzeuger (100, 112) in den spannungsprägenden Betrieb wechselt und die Anzahl der umrichterbasierten Erzeuger (100, 112), die in den spannungsprägenden Betrieb wechseln, von dem geschätzten Umrichteranteil abhängt.

13. Verfahren nach einem der vorstehenden Ansprüche, **dadurch gekennzeichnet, dass**
- ein dritter Stützmodus vorgesehen ist, der ergänzend zum Normalmodus aktivierbar ist, und/oder der aktivierbar ist, wenn der Umrichteranteil den ersten Referenzwert nicht erreicht, wobei
- im dritten Stützmodus eine niederfrequente Schwingung im elektrischen Versorgungsnetz (120) erfasst wird, die insbesondere eine Schwingung einer Amplitude der Netzspannung bezeichnet, die eine geringere Frequenz als eine Netznennfrequenz aufweist, und
- eine Bedämpfung der erfassten niederfrequenten Schwingung durchgeführt wird.

14. Verfahren nach einem der vorstehenden Ansprüche, **dadurch gekennzeichnet, dass**
- unter den nicht mittels Umrichter einspeisenden Erzeugern eine dominierende Kraftwerksart des Netzabschnitts erfasst wird, wobei
- als Kraftwerksart nicht mittels Umrichter einspeisender Erzeuger wenigstens zwischen einem Grundlastkraftwerk und einem Regelkraftwerk unterschieden wird, insbesondere wenigstens zwischen einem Kernkraftwerk, einem Kohlekraftwerk, einem Gaskraftwerk und einem Wasserkraftwerk unterschieden wird, und
- diejenige Kraftwerksart die dominierende Kraftwerksart bildet, die unter den nicht mittels Umrichter einspeisenden Erzeugern die meiste Leistung in den Netzabschnitt einspeisen kann, und
- in Abhängigkeit von der dominierenden Kraftwerksart
- der erste, zweite und ggf. dritte Stützmodus ausgewählt wird und/oder
- wenigstens eine Ergänzungsregelung ausgewählt und eingesetzt wird.

15. Windenergiesystem (100, 112) zum Einspeisen elektrischer Leistung in ein eine Netzspannung mit einer Netzfrequenz aufweisendes elektrisches Versorgungsnetz (120), wobei das Windenergiesystem (100, 112) als umrichterbasierter Erzeuger (100, 112) ausgebildet ist, umfassend:
- eine Schätzeinrichtung zum Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet,
- eine Einspeiseeinrichtung (105) zum Einspeisen elektrischer Leistung in das elektrische Versorgungsnetz (120) in einem Normalmodus in Abhängigkeit vom geschätzten Umrichteranteil,
- eine Steuerungseinrichtung (103, 122), vorbereitet zum Aktivieren eines ersten Stützmodus in Abhängigkeit vom geschätzten Umrichteranteil gemäß einer ersten Aktivierungsbedingung, und
- vorbereitet zum Aktivieren eines zweiten Stützmodus in Abhängigkeit vom geschätzten Umrichteranteil gemäß einer zweiten Aktivierungsbedingung, die zur ersten Aktivierungsbedingung verschieden ist,
**dadurch gekennzeichnet, dass** im ersten Stützmodus
- eine Leistungsabregelungsfunktion (414) zur schnellen Leistungsabregelung implementiert ist, wobei die Leistungsabregelungsfunktion (414) auf ein Anforderungssignal oder Anforderungskriterium das Einspeisen elektrischer Leistung reduziert, und
- die Reduzierung der Leistung durch eine Reduzierungszeitkonstante gekennzeichnet ist, wobei die Reduzierungszeitkonstante eine Zeit bezeichnet, in der die Leistung um einen Nennleistungswert reduziert wird, wobei die Reduzierungszeitkonstante kleiner als 2, 1 oder 0,5 Sekunden ist, und/oder, dass
- bei Verwendung eines Windenergiesystems (100, 112) als umrichterbasierter Erzeuger (100, 112) die Reduzierung der eingespeisten Leistung schneller ist als eine Reduzierung mittels des Windenergiesystems (100, 112) aus Wind erzeugter Leistung, und/oder dass
- zum Reduzieren der eingespeisten Leistung Leistung im Windenergiesystem (100, 112) zusätzlich verbraucht wird, insbesondere mittels einer Chopperschaltung, und/oder dass
- die eingespeiste Leistung auf einen Wert unter null reduziert wird, sodass das Windenergiesystem (100, 112) Leistung aus dem elektrischen Versorgungsnetz (120) entnimmt und insbesondere, zumindest teilweise, mittels einer Chopperschaltung verbraucht.

16. Windenergiesystem (100, 112) nach Anspruch 15, **dadurch gekennzeichnet, dass** das Windenergiesystem (100, 112) dazu eingerichtet ist, ein Verfahren nach einem der Ansprüche 1 bis 14 auszuführen.
